# EUROPÄISCHE PATENTSCHRIFT

(11) **EP 4 171 918 B1**
(45) Veröffentlichungstag und Bekanntmachung des Hinweises auf die Patenterteilung: **21.08.2024**
(21) Anmeldenummer: 21736256.5
(22) Anmeldetag: 16.06.2021
(51) Int. Cl.: B29C 49/42, B29C 49/06, B29C 49/36, B29L 31/00

(54) **BEHÄLTNISÜBERGABEEINRICHTUNG EINER EINSTERNZUFÜHRUNG FÜR BEHANDLUNGSEINRICHTUNG UND VERFAHREN ZUR BEHÄLTNISÜBERGABE**
CONTAINER TRANSFER DEVICE OF A SINGLE-STAR FEED FOR A TREATMENT DEVICE, AND METHOD FOR TRANSFERRING CONTAINERS
DISPOSITIF DE TRANSFERT DE RÉCIPIENT D'UN DISPOSITIF D'ALIMENTATION À UNE ÉTOILE POUR UN DISPOSITIF DE TRAITEMENT ET PROCÉDÉ DE TRANSFERT DE RÉCIPIENTS

(30) Priorität: 24.06.2020 DE 102020116679
(43) Veröffentlichungstag der Anmeldung: 03.05.2023
(73) Patentinhaber: Krones AG, 93073 Neutraubling (DE)
(72) Erfinder: VOTH, Klaus, 93073 Neutraubling (DE)
(74) Vertreter: Hannke Bittner & Partner mbB Regensburg
(86) Internationale Anmeldenummer: PCT/EP2021/066317
(87) Internationale Veröffentlichungsnummer: WO 2021/259737

(56) Entgegenhaltungen:
- EP-A1- 2 412 651
- EP-A1- 3 366 453
- DE-A1- 10 325 693
- US-A1- 2007 176 330
- US-A1- 2017 072 618

## Beschreibung

Die vorliegende Erfindung betrifft eine Behältnisübergabeeinrichtung einer Einsternzuführung für eine, insbesondere kontinuierlich angetriebene, Behandlungseinrichtung. Die Behältnisübergabeeinrichtung weist wenigstens zwei Greifelemente zum Zuführen von zu behandelnden Behältern an eine Behandlungseinrichtung und zum Entnehmen der behandelten Behälter von einer Behandlungseinrichtung auf. Gattungsgemäße Vorrichtungen und Verfahren sind in den Patentschriften DE10325693A1, EP2412651A1 und EP3366453A1 beschrieben.

Aus dem Stand der Technik sind verschiedene Systeme zum Zuführen von zu behandelnden Behältern an eine Behandlungseinrichtung und zum Entnehmen der behandelten Behälter von einer Behandlungseinrichtung bekannt. Bei einer solchen Behandlungseinrichtung handelt es sich insbesondere um eine Einrichtung zur Blasformung von Behältern. Üblicherweise wird ein Vorformling nach einer thermischen Behandlung / Vorkonditionierung an eine Blasstation übergeben und in eine Blasform eingeführt, in welcher dieser durch Einwirkung eines Blasdrucks zu einem Behälter umgeformt wird. Um diesen Prozess möglichst (zeit-) effizient zu gestalten ist bekannt, eine Vielzahl von Blasstationen mit jeweils einer Blasform auf einem Tragrad beziehungsweise Blasrad anzuordnen. Die Umformung der Vorformlinge erfolgt während eines Umlaufs des Blasrads, wobei jeder Vorformling während des Durchlaufens eines bestimmten Sektors einem diesem Sektor zugeordneten Behandlungs-(teil-)schritt unterzogen wird.

Aus dem Stand der Technik ist bekannt, dass das Zuführen der Vorformlinge und das Abführen der geformten Behältnisse kontinuierlich erfolgen, wobei mindestens ein sogenannter Zuführstern und mindestens ein sogenannter Abfuhrstern verwendet werden. Zuführstern und Abfuhrstern sind dabei bevorzugt als radartige und/oder sternartigen Übergabeeinrichtungen ausgeführt, welche auch als Hilfsträger bezeichnet werden können. Die thermisch vorkonditionierten Vorformlinge werden vom Zuführstern an eine der Mehrzahl von Behandlungsstationen des Blasrads übergeben. Nach der Blasformung werden die umgeformten Behältnisse von dem Abfuhrstern (auch als Entnahmerad oder Entnahmestern bezeichnet) wieder entnommen und an weitere Behandlungseinrichtungen wie beispielsweise eine Fülleirichtung weitergeleitet.

Derartige Vorrichtungen haben den Nachteil, dass die Zu- und Abführräder/-Sterne einen relativ großen Raumbedarf haben. Dies hat zur Folge, dass das Blasrad einen relativ großen toten Winkel (im Sektor zwischen diesen beiden Sternen) aufweist, in welchem praktisch keine Behandlung beziehungsweise Umformung stattfinden kann. Dieser tote Winkel begrenzt entsprechend die Anzahl von gleichzeitigen Aufnahmemöglichkeiten von Behältnissen und damit auch die Anzahl gleichzeitig nutzbaren Behandlungsstationen. Um dennoch die geforderte Anzahl gleicher Behandlungen gewährleisten zu können und die für den Behandlungsprozess nötige Verweilzeit in der jeweiligen Behandlungsstation zu bieten, muss - da die Anlagenleistung unter anderem mit dem Durchmesser des Behandlungsrades korreliert - das Blasrad einen größeren Durchmesser aufweisen, was deutlich höhere Kosten nach sich zieht.

Aus der DE 10 2011 079 078 A1 ist ein alternatives System bekannt. Die darin beschriebene Behandlungsvorrichtung weist ebenfalls eine, insbesondere kontinuierlich angetriebene, Behandlungseinrichtung auf, beispielsweise ein Blasrad. Dieses weist mindestens eine Behandlungsstation zur Behandlung von Behältern auf. Eine Besonderheit dieses System ist, dass es nur einen einzelnen Stern zum Zuführen und Entnehmen von Behältern in beziehungsweise aus einer Behandlungsstation der Behandlungseinrichtung aufweist. Ein solcher Stern umfasst mehrere Greifelemente zum Zuführen von zu behandelnden Behältern an die Behandlungsstation und zum Entnehmen der behandelten Behälter von der Behandlungsstation. Wesentlich ist weiterhin, dass die Behandlungsstation mindestens Behandlungselement aufweist, mittels welchem die zugeführten, zu behandelnden Behälter und/oder die zu entnehmenden, behandelten Behälter aus der Behandlungsposition heraus und/oder in die Behandlungsposition hinein, bewegbar sind.

Nachteil einer derartigen Ausgestaltung ist jedoch, dass jede Behandlungsstation mit mindestens einem zusätzlichen Behandlungselement ausgestattet werden muss, um die zu behandelnden Behälter und/oder die zu entnehmenden, behandelten Behälter aus der Behandlungsposition heraus und/oder in die Behandlungsposition hinein zu bewegen. Da aufgrund der übrigen, für jede Behandlungsstation zwingend erforderlichen Behandlungseinrichtungen, wie beispielsweise der Blasform und der Fluidleitungen) das Platzangebot üblicherweise gering ist, ist die Anordnung des zusätzlichen Behandlungselements oft mit Problemen verbunden. Darüber hinaus wird durch diese Behandlungselemente das Blasrad schwerer, was dessen Handhabung erschwert und es verteuert.

Es ist daher Aufgabe der vorliegenden Erfindung ein vereinfachtes und effizienteres System zur Einsternzuführung für Behandlungsmaschinen bereitzustellen.

Diese Aufgabe wird vorrichtungsseitig durch eine Vorrichtung gemäß Patentanspruch 1 gelöst.

Weiterhin wird die der Erfindung zugrundeliegende Aufgabe durch ein Verfahren gemäß Patentanspruch 7 gelöst.

Eine erfindungsgemäße Lösung des zugrundeliegenden Problems wird somit durch eine Transportvorrichtung für Behältnisse gelöst, welche eine Übernahmeeinrichtung zur Übernahme eines ersten Behältnisses von einer beweglichen Behandlungsvorrichtung und eine Übergabeeinrichtung zur Übergabe eines zweiten Behältnisses an die bewegliche Behandlungsvorrichtung und aufweist. Die Behandlungsvorrichtung weist mindestens eine Behandlungseinrichtung mit einer bezüglich der Behandlungseinrichtung ortsfesten Behältnisaufnahme auf. Die Übergabeeinrichtung und die Übernahmeeinrichtung sind auf einem gemeinsamen beweglichen Träger angeordnet. Die Übergabeeinrichtung und die Übernahmeeinrichtung sind abschnittsweise entlang eines Transportpfades der Behältnisse beweglich. Insbesondere zeichnet sich die Transportvorrichtung dadurch aus, dass die Übergabeeinrichtung und die Übernahmeeinrichtung zur Übergabe oder Übernahme eines Behältnisses zumindest abschnittsweise mit einer Bewegung der Behältnisaufnahme synchronisierbar sind.

Als Behältnis soll im Folgenden jegliches Behältnis verstanden werden, welches zur Aufnahme eines Mediums geeignet ist. Erstes und zweites Behältnis können identisch oder verscheiden sein. Identische Behältnisse können jedoch verschiedene Inhalte aufweisen. Handelt es sich bei der Behandlungsvorrichtung beispielsweise um eine Füllvorrichtung, kann ein erstes Behältnis ein gasförmiges Medium enthalten, das zweite Behältnis eine Flüssigkeit oder ein anderes Gas. Auch wäre denkbar, dass es sich bei der Behandlungsvorrichtung um eine Sterilisationsvorrichtung handelt. Ein erstes Behältnis könnte in diesem Fall beispielsweise ein unsteriles Behältnis sein und das zweite Behältnis ein steriles Behältnis.

Bevorzugt ist jedoch, dass es sich bei der Behandlungsvorrichtung um eine Umformungsvorrichtung handelt. In der Behandlungsvorrichtung werden Behältnisvorkörper zu Behältnissen umgeformt. Bei dem ersten Behältnis kann es sich somit um einen Vorformling handeln und bei dem zweiten Behältnis um ein aus einem solchen Vorformling geformtes Behältnis. Bevorzugt ist, dass ein dafür vorgesehener Vorformling abschnittsweise bereits die Form des umgeformten Behältnisses aufweist. Bei diesem nicht umzuformenden Abschnitt kann es sich beispielsweise um ein Mundstück, eine Öffnung, ein Gewinde und/oder ein anderen mit einem Verschluss kraft- und/oder formschlüssig wechselwirkender Abschnitt eines Behältnisses handeln.

Bevorzugt handelt es sich bei dem ersten und/oder zweiten Behältnis um Flaschen und/oder Vorformlinge. Dementsprechend ist bevorzugt, dass die Behandlungsvorrichtung dazu geeignet ist, den Vorformling in eine Flasche umzuformen. Die Behandlungseinrichtung ist somit bevorzugt eine Blasstation. Denkbar wäre jedoch auch, dass die Behandlungsvorrichtung ein Füller ist, dem leere Flaschen zugeführt werden, diese von der Behandlungseinrichtung befüllt werden und die gefüllten Flaschen durch die Übernahmeeinrichtung aus der Behandlungsvorrichtung entnommen werden. Alternativ oder ergänzend dazu, könnte die Behandlungsvorrichtung auch mindestens eine Behandlungseinrichtung aufweisen, die ausgewählt ist aus einer Gruppe, die Sterilisationseinrichtung, Verschlusseinrichtung, Heizeinrichtung, Kühleinrichtung und Etikettiereinrichtung umfasst.

Bevorzugt handelt es sich bei der Behandlungsvorrichtung um eine rotierenden Behandlungsvorrichtung, welche mindestens eine Behandlungseinrichtung, bevorzugt eine Vielzahl Behandlungseinrichtungen, umfasst. Beispielsweise kann es sich im Fall, dass die Behandlungseinrichtung eine Umformungsstation, beispielsweise eine Blasstation ist, um ein Blasrad handeln. Bevorzugt ist die mindestens eine Behandlungseinrichtung austauschbar, beispielsweise um die Behandlungseinrichtung zur Behandlung andersartiger Behältnisse aus- oder umzurüsten.

Bevorzugt ist, dass der bewegliche Träger ein rotierender Träger ist. Bevorzugt handelt es sich um einen Transportstern. Bevorzugt weist ein solcher Transportstern eine Vielzahl von Übergabeeinrichtungen und Übernahmeeinrichtungen auf.

Bevorzugt, sind auf dem beweglichen Träger die Übergabeeinrichtung und Übernahmeeinrichtung paarweise angeordnet. Als "paarweise" soll in diesem Zusammenhang verstanden werden, dass mindestens eine, bevorzugt genau eine Übergabeeinrichtung und mindestens eine, bevorzugt genau eine Übernahmeeinrichtung so auf dem beweglichen Träger, dass sie bezüglich des beweglichen Trägers Positionen im selben Sektor einnehmen können. Bevorzugt können die Übergabeeinrichtung und die Übernahmeeinrichtung identische Positionen einnehmen. Dies ist jedoch nicht zwingend erforderlich und ein einigen Fällen - beispielsweise aufgrund der unterschiedlichen Größe der zu übergebenden Vorformlinge und der zu übernehmenden Flaschen - nicht vorteilhaft.

Eine vorteilhafte Ausgestaltung sieht vor, dass eine Übergabeeinrichtung und eine Übernahmeeinrichtung an dem beweglichen Träger derart gehaltert sind, dass sie gegenüber dem beweglichen Träger zumindest in radialer Richtung und/oder in axialer Richtung verschiebbar sind. Diese Ausgestaltung hat den Vorteil, dass ein Paar aus Übergabeeinrichtung und Übernahmeeinrichtung in einen besonders schmalen Sektor des beweglichen Trägers gegenüber diesem relativbeweglich ist. Als axiale Richtung wir bei der Ausgestaltung als rotierender Träger die Richtung der Erstreckung der Rotationsachse bezeichnet. Bei anderen Transporteirichtungen, soll analog dazu eine zum Transportpfad senkrecht stehende Richtung als axiale Richtung verstanden werden, bei einem gekrümmten Abschnitt des Transportpfads eine senkrecht zur Krümmung stehende Richtung.

Bevorzugt ist mindestens die Übergabeeinrichtung und/oder die Übernahmeeinrichtung senkrecht zu einer Bewegungsrichtung des beweglichen Trägers relativ zu diesem bewegbar.

Alternativ oder ergänzend dazu ist in einer bevorzugten Ausgestaltung vorgesehen, dass eine Übergabeeinrichtung und eine Übernahmeeinrichtung an dem beweglichen Träger derart gehaltert sind, dass sie gegenüber dem beweglichen Träger zumindest in radialer Richtung und/oder in Umfangsrichtung des beweglichen Trägers verschiebbar sind. Diese Ausgestaltung hat den Vorteil, dass die Relativbewegung der Übergabeeinrichtung und Übernahmeeinrichtung bezüglich des beweglichen Trägers eine Komponente aufweist, die sich entlang dessen Umfangsrichtung erstreckt. Dies ermöglicht während der Übergabe und/oder Übernahme eines Behältnisses von oder an eine Behandlungseinrichtung, dass der zur Übergabe und/oder Übernahme zur Verfügung stehende Sektor durch Verschiebung des jeweiligen Behältnisses entlang der Umfangsrichtung des beweglichen Trägers vergrößert werden kann. Somit steht für die Übergabe und/oder Übernahme mehr Zeit zur Verfügung. Dies ist insbesondere bei sehr schnellen Übergaben und/oder Übernahmen vorteilhaft.

Es ist denkbar und in einigen Fällen auf vorteilhaft, dass eine Übergabeeinrichtung und/oder Übernahmeeinrichtung entlang des beweglichen Trägers verschiebbar ist, wobei diese Relativbewegung eine Komponente aufweist, die sich entlang dessen radialer Richtung, der axialen Richtung und dessen Umfangsrichtung erstreckt. Dies ermöglicht eine individuell auf die jeweilige Behältnisgeometrie angepasste Führung der Übergabeeinrichtung und/oder Übernahmeeinrichtung, was den Übernahme-Übergabe-Prozess beschleunigen kann. Der Bereich, in dem die Übernahme und Übergabe stattfinden, kann so reduziert werden.

Bevorzugt ist, dass die Übergabeeinrichtung und die Übernahmeeinrichtung (eines Paares) auf einem - zumindest abschnittsweise - gemeinsamen Transportpfad gegenüber dem beweglichen Träger relativbeweglich sind. Dieser gemeinsamen Transportpfad könnte beispielsweise durch ein auf dem beweglichen Träger angeordnetes Kulissen- oder Schienensystem oder eine gemeinsame rotierbare Halterung definiert sein.

Die Übergabeeinrichtung und die Übernahmeeinrichtung können gegenüber dem beweglichen Träger unabhängig voneinander relativbeweglich sein. Beispielsweise wäre denkbar, Übergabeeinrichtung und Übernahmeeinrichtung jeweils durch einen separaten Servomotor ansteuerbar auszuführen. Dies hat den Vorteil, dass sehr einfach auf unterschiedliche Behältnisgeometrien, beispielsweise -durchmesser oder -längen reagiert werden kann, und dementsprechend verschiedene Behältnisse auf derselben Transportvorrichtung transportiert werden können.

Alternativ dazu, ist gemäß einer vorteilhaften Ausführungsform vorgesehen, dass die Übergabeeinrichtung und die Übernahmeeinrichtung gegenüber dem beweglichen Träger in einer gekoppelten Bewegung beweglich ausgestaltet sind. Als eine derartige Ausgestaltung ist beispielsweise denkbar, Übergabeeinrichtung und Übernahmeeinrichtung gemeinsam auf einem schwenkbaren oder rotierbaren Halterträger anzuordnen. Diese Ausgestaltung ist besonders einfach und kostengünstig realisierbar, da sie nur einen gemeinsamen Antrieb benötigt. Darüber hinaus wird durch eine derartige Ausgestaltung sichergestellt, dass zwischen Übergabeeinrichtung und die Übernahmeeinrichtung ein erforderlicher und durch den Halterträger vorgegebenen Mindestabstand zwingend eingehalten wird. Dadurch kann verhindert werden, dass - insbesondere bei sehr hohen Transportgeschwindigkeiten - Übergabeeinrichtung und Übernahmeeinrichtung einander berühren und sich gegenseitig oder ein aufgenommenes Behältnis beschädigen.

In einer bevorzugten Ausführungsform ist die Behandlungsvorrichtung und/oder der bewegliche Träger auf einer Kreisbahn bewegbar. In einem Sektor, in dem sich Behandlungsvorrichtung und/oder der bewegliche Träger am nächsten sind oder sich sogar abschnittsweise überlappen, ist die Bewegung der Übergabeeinrichtung und/oder der Übernahmeeinrichtung mit einer Bewegung einer Behältnisaufnahme zumindest abschnittsweise synchronisiert. Dieser Sektor wird im Folgenden auch als "Übernahme-Übergabe-Sektor" bezeichnet. In dem synchronisierten Abschnitt überlagern sich ein Transportpfad der Übergabeeinrichtung oder der Übernahmeeinrichtung mit einem Transportpfad der Behältnisaufnahme. Durch diese Überlagerung und aneinander angepasste Geschwindigkeit der Übergabeeinrichtung oder der Übernahmeeinrichtung mit derjenigen der Behältnisaufnahme ist es möglich, dass ein Behältnis von der Übernahmeeinrichtung aus der Behältnisaufnahme entnehmbar ist oder ein anderes Behältnis von der Übergabeeinrichtung in eine Behältnisaufnahme einer Behandlungseinrichtung einsetzbar ist.

Insbesondere ist bevorzugt, dass ein solcher synchronisierter Abschnitt zwei Teilabschnitte umfasst, wobei in einem ersten Teilabschnitt die Bewegung der Übernahmeeinrichtung mit einer Bewegung einer Behältnisaufnahme synchronisiert ist und in einem zweiten Teilabschnitt die Bewegung der Übergabeeinrichtung mit einer Bewegung einer Behältnisaufnahme synchronisiert ist. Dabei ist es nicht zwingend notwendig, dass beide Teilabschnitte identisch sind. Sie können sich insbesondere hinsichtlich deren Größe und unterscheiden. Dies könnte beispielsweise in der unterschiedlichen Geometrie des zu übergebenden und des zu übernehmenden Behältnisses im Fall einer Umformung begründet sein. Weiterhin ist es nicht zwingend erforderlich, dass die beiden Teilabschnitte unmittelbar aufeinander folgen. Vielmehr ist es meist erforderlich, einen äußerst schmalen Sektor zwischen beiden Teilabschnitten vorzusehen, in welchem die Behältnisaufnahme leer ist. In diesem Bereich ist ein zuvor gehaltenes Behältnis bereits von der Übernahmeeinrichtung aus der Behältnisaufnahme entnommen, es ist jedoch noch nicht weit genug von dieser Entfernt, um das Zustellen eines anderen Behältnisses durch die Übergabeeinrichtung an die Behältnisaufnahme zu ermöglichen. Bevorzugt ist der Mittelpunktswinkel dieses Sektors, in dem Behältnisaufnahme leer ist, ≤ 10°, bevorzugt ≤ 7°, besonders bevorzugt ≤ 5°, insbesondere bevorzugt ≤ 3° und meist bevorzugt ≤ 2° bezogen auf die Behandlungsvorrichtung.

Bevorzugt ist die Behandlungseinrichtung eine Blasstation. Es hat sich gezeigt, dass eine wie oben beschriebene Transporteinrichtung bei einer Blasstation, einer Vielzahl von Blasstationen und insbesondere bei einem Blasrad besonders vorteilhaft ist. Dies ist insbesondere damit begründet, dass eines der Behältnisse, nämlich der Vorformling besonders klein ist und daher in einem sehr kleinen Teilabschnitt eines Übernahme-Übergabe-Sektor übergebbar ist.

Es ist bevorzugt, dass die Behältnisaufnahme bezüglich der Behandlungsvorrichtung zumindest entlang der axialen Richtung eines aufgenommenen oder aufzunehmenden Behältnisses ortsfest ist. Dies ist insbesondere deshalb vorteilhaft, da ein Blasrad aufgrund der Vielzahl der für den Umformungsprozess notwendigen Einrichtungen meist besonders schwer ist und für weitere Einrichtungen - wie beispielsweise für Einrichtungen zur Axialverschiebung von Behältnissen - wenig Raum bietet. Durch die Auslagerung möglichst vieler Einrichtungen zur Übernahme und Übergabe von Behältnissen auf andere Anlagenteile können daher besondere Vorteile erzielt werden.

In einer bevorzugten Ausführungsform weisen die Übergabeeinrichtung und die Übernahmeeinrichtung ein Halteelement auf, welches zur temporären Halterung eines Behältnisses bestimmt und vorgesehen ist. Ein solches Halteelement kann aktiv oder passiv ausgebildet sein. Bevorzugt handelt es sich um eine Klammer. Bevorzugt ist das Halteelement derart gestaltet, dass es ein Behältnis im Bereich dessen Öffnung greifen kann, beispielsweise an einem Neckring. Da meist der Bereich der Öffnung eines Behältnisses während einer Behandlung des Behältnisses, beispielsweise die Umformung eines Vorformlings in ein Behältnis nicht ebenfalls verformt wird, sind die Halteelemente von Übergabeeinrichtung und Übernahmeeinrichtung bevorzugt identisch ausgestaltet.

Bevorzugt weist mindestens die Übergabeeinrichtung oder die Übernahmeeinrichtung, bevorzugt beide mindestens einen Arm auf, an welchem ein Halteelement zur temporären Halterung eines Behältnisses angeordnet ist. Ein solcher Arm ist bevorzugt zwischen einem Halteelement und dem beweglichen Träger angeordnet. Daher wird ein solcher Arm im Folgenden auch als "Verbindungselement" bezeichnet, wobei beide Begriffe synonym verwendet werden ohne dass der Begriff "Verbindungselement" zwingend eine unmittelbare Verbindung zwischen beweglichen Träger und Halteelement erforderlich macht. Insbesondere ist bevorzugt, dass der Arm bezüglich des beweglichen Trägers relativbeweglich angeordnet ist. Dies ermöglich die Verschiebung des Halteelements bezüglich des beweglichen Trägers.

Als eine besonders raumsparende Lösung hat sich eine Ausführungsform gezeigt, bei welcher der Arm von mindestens der Übergabeeinrichtung oder der Übernahmeeinrichtung zweiteilig ausgebildet ist. Die mehrteilige Ausgestaltung des Arms hat diverse Vorteile. Einer besteht darin, dass ein Verschwenken eines gehaltenen Behältnisses bezüglich dessen Längsachse besonders einfach realisierbar ist.

Ein weiterer Vorteil ergibt sich bei einer ergänzenden oder alternativen Ausgestaltung, bei welcher die beiden Teile eines solchen Arms zumindest zeitweise den Arm der anderen Einrichtung eines Paares aus Übergabeeinrichtung und Übernahmeeinrichtung umschließen. Beispielsweise ist der Arm der Übernahmeeinrichtung zweiteilig ausgebildet, so dass der Arm der Übergabeeinrichtung zeitweise zwischen den beiden Arm-Teilen der Übernahmeeinrichtung positioniert sein kann. Bevorzugt sind die beiden Teile des Arms der Übernahmeeinrichtung so weit voneinander beanstandet, dass nicht nur der Arm der Übergabeeinrichtung zeitweise zwischen den beiden Arm-Teilen anordenbar ist, sondern dass auch ein Behältnis, beispielsweise ein Vorformling, zeitweise zwischen diesen beiden Arm-Teilen anordenbar ist. Diese Ausführungsform ist besonders vorteilhaft, da so ein Vorformling zumindest zeitweise zwischen den Arm-Teilen der Übernahmeeinrichtung angeordnet sein kann, was eine besonders raumsparende Übernahme und Übergabe ermöglicht.

In einer bevorzugten Ausführungsform ist eine Führung und/oder Schiene vorgesehen, durch welche die Bewegung eines Halteelements der Übergabeeinrichtung und/oder
Übernahmeeinrichtung vorgegeben ist. Bevorzugt ist ein Arm der Übergabeeinrichtung und/oder Übernahmeeinrichtung (und damit bevorzugt auch das jeweils zugeordnete Halteelement) durch ein geeignetes Verbindungselement entlang der Führung und/oder Schiene verschiebbar.

Als besonders bevorzugt haben sich Ausführungsformen erwiesen, bei denen die Führung und/oder Schiene eine geschlossene Bahn beschreiben. Dabei kann es sich um eine Kreisbahn handeln. Insbesondere bei dem Transport unterschiedlich geformter Behältnisse, beispielsweise einem Vorformling durch die Übergabeeinrichtung und einem umgeformten Behältnis durch die Übernahmeeinrichtung haben sich jedoch andere Bahnformen als vorteilhafter erwiesen.

Bei einer bevorzugten Ausführungsform weist die Führung und/oder Schiene im Wesentlichen eine dreieckige Form auf. Diese Ausgestaltung ist insbesondere dann vorteilhaft, wenn die geschlossene Bahn im Wesentlichen senkrecht zu der Bewegungsrichtung des beweglichen Trägers ausgerichtet ist. Diese Ausführungsform ermöglicht nämlich, dass bei der Bewegung des umgeformten Behältnisses durch die Übernahmeeinrichtung der größte Volumenanteil des (vergleichsweise großen umgeformten) Behältnis außerhalb des von der Bahn umschlossenen Bereichs angeordnet ist, während bei der Bewegung des umzuformenden Behältnisses durch die Übergabeeinrichtung der größte Volumenanteil des (vergleichsweise kleine, umzuformenden) Behältnis (Vorformlings) innerhalb des von der Bahn umschlossenen Bereichs angeordnet ist. So können die großen Volumenanteile beider Behältnisse auch während des kurzen Zeitintervalls, während dessen jeweils ein Behältnis durch die Übernahmeeinrichtung als auch durch die Übergabeeinrichtung gehalten wird, auf sehr wenig Raum aneinander vorbeigeführt werden.

Bei einer anderen bevorzugten Ausführungsform weist die Führung und/oder Schiene im Wesentlichen eine ovale Form auf. Diese Ausgestaltung ist insbesondere dann vorteilhaft, wenn die geschlossene Bahn im Wesentlichen parallel zu der Fläche verläuft, auf welcher die Bewegungsrichtung des beweglichen Trägers liegt. Diese Ausführungsform ermöglicht nämlich, dass bei geringer Ausdehnung der Bahn entlang der Umfangsrichtung des beweglichen Trägers eine große Ausdehnung der Bahn entlang der radialen Richtung des beweglichen Trägers ermöglicht wird. Insbesondere bei dem Transport unterschiedlich geformter Behältnisse, beispielsweise einem Vorformling durch die Übergabeeinrichtung und einem umgeformten Behältnis durch die Übernahmeeinrichtung ist der maximale Durchmesser eines Behältnisses deutlich geringer als der maximale Durchmesser des anderen Behältnisses. Dadurch ist es nicht notwendig, dass im Bereich der minimalen Annäherung gegenüberliegender Bahnabschnitte ein Abstand eingehalten wird, der mindestens dem Doppelten des maximalen Durchmessers des umgeformten Behältnisses entspricht. Auch bei großer Annäherung gegenüberliegender Bahnabschnitte können während des kurzen Zeitintervalls, während dessen jeweils ein Behältnis durch die Übernahmeeinrichtung als auch durch die Übergabeeinrichtung gehalten wird, die Behältnisse aufgrund des geringen Umfangs eines Vorformlings noch aneinander vorbeigeführt werden.

Bevorzugt ist eine Behältnisaufnahme ein passives Element, beispielsweise eine Klammer. Aktive Einrichtungen, die zur Übernahme und Übergabe notwendig sind, beispielsweise zum Eindrücken eines Vorformlings in eine Klammer und das Herausziehen aus einer Klammer entgegen der Haltekraft der Klammer, sind bevorzugt auf die Übergabeeinrichtung und die Übernahmeeinrichtung ausgelagert.

Weiterhin wird die der Erfindung zugrundeliegende Aufgabe durch ein Verfahren zur Übergabe und zur Übernahme von Behältnissen durch eine Transportvorrichtung für Behältnisse gelöst, wobei die Transportvorrichtung eine Übergabeeinrichtung und eine Übernahmeeinrichtung aufweist die auf einem gemeinsamen beweglichen Träger angeordnet sind, gegenüber welchem sie relativbeweglich sind. Die Übernahmeeinrichtung übernimmt ein erstes Behältnis von einer bezüglich einer zugeordneten Behandlungseinrichtung ortsfesten Behältnisaufnahme, die an einer beweglichen Behandlungsvorrichtung angeordnet ist, und die Übergabeeinrichtung übergibt ein zweites Behältnis an eine Behältnisaufnahme derselben Behandlungseinrichtung. Das Verfahren zeichnet sich insbesondere durch die Schritte aus:
a) Synchronisation der Bewegung der Behandlungseinrichtung und der Übernahmeeinrichtung,
b) Übernahme eines ersten Behältnisses von der Behältnisaufnahme der Behandlungseinrichtung durch die Übernahmeeinrichtung,
c) Synchronisation der Bewegung der Übergabeeinrichtung und der Behandlungseinrichtung,
d) Übergabe eines zweiten Behältnisses von der Übergabeeinrichtung an eine Behältnisaufnahme der in Schritt b) freigewordenen Behandlungseinrichtung.

Dieses Verfahren ermöglicht es, den Transportpfad einer Behandlungseinrichtung zu reduzieren, entlang dessen sich kein Behältnis in diesem befindet. Dementsprechend kann der Anteil des Transportpfads der Behandlungsvorrichtung, in welchem eine Behandlung des Behältnisses stattfindet, erhöht werden. Dadurch kann die Behandlungsvorrichtung insgesamt kleiner gestaltet oder die Anzahl der parallel möglichen Behandlungen erhöht werden. Bei gleicher Leistung ist eine Gewichts- und Durchmesserreduzierung möglich.

In einer bevorzugten Variante des Verfahrens wird mindestens die Übergabeeinrichtung und/oder die Übernahmeeinrichtung entlang einer Richtung bewegt, die eine zur Bewegungsrichtung des beweglichen Trägers senkrecht verlaufende Richtungskomponente aufweist. Insbesondere wird vorgeschlagen, dass ein beweglicher Träger beispielsweise rotierend in einer Ebene bewegt wird und die Übergabeeinrichtung und/oder die Übernahmeeinrichtung durch die Verbindung mit dem beweglichen Träger dieser Rotation folgen, jedoch zusätzlich auch senkrecht bezüglich dieser Ebene verschoben werden. Diese senkrechte Verschiebung kann mit zusätzlichen Bewegungen gekoppelt sein und zeitgleich mit diesen verlaufen. Beispielsweise kann die senkrechte Verschiebung zeitgleich mit einer radialen Verschiebung der Übergabeeinrichtung und/oder die Übernahmeeinrichtung bezüglich des beweglichen Trägers erfolgen.

Bevorzugt ist vorgesehen, dass die Übergabeeinrichtung und die Übernahmeeinrichtung auf dem beweglichen Träger zumindest abschnittsweise auf einer Kreisbahn geführt werden. Wie oben ausgeführt und in einigen der unten beschriebenen Figuren dargestellt ist der bewegliche Träger bevorzugt ein Transportstern, der um eine zentrale Achse rotierbar ist. Dadurch, dass die Übergabeeinrichtung und die Übernahmeeinrichtung an dem beweglichen Träger angeordnet sind, folgen sie dieser Rotation. Wie oben beschrieben, können sie jedoch zusätzlich bezüglich des beweglichen Trägers in senkrechter oder radialer Richtung bewegt werden. Insbesondere die Bewegung in radialer Richtung ist im Bereich der Übernahme und Übergabe eines Behältnisses vorteilhaft, da so dem Transportpfad einer Behältnisaufnahme entlang der Behandlungsvorrichtung über einen längeren Abschnitt gefolgt werden kann und somit mehr Zeit und Raum für die Übergabe und Übernahme eines Behältnisses zur Verfügung steht.

Gemäß einer bevorzugten Verfahrensvariante ist vorgesehen, dass das erste und das zweite Behältnis entlang eines gemeinsamen Transportpfades geführt werden, dessen senkrechte Projektion mindestens einen Kreuzungspunkt aufweist. Dieser Kreuzungspunkt liegt bevorzugt in einem Sektor bezüglich der Behandlungsvorrichtung, der sich von der Position der Übernahme eines Behältnisses von einer Behandlungseinrichtung durch die Übernahmeeinrichtung und der Position der Übergabe eines Behältnisses an eine Behältnisaufnahme derselben Behandlungseinrichtung durch die Übergabeeinrichtung erstreckt. Bevorzugt liegt der Kreuzungspunkt zwischen Behandlungsvorrichtung und Transportvorrichtung. Dadurch wird ein besonders kurzer Abschnitt gewährleistet, in welchem keine Behandlung eines Behältnisses stattfinden kann.

Bevorzugt wird eine Längsachse eines Behältnisses während eines Transports durch die Übergabeeinrichtung und/oder die Übernahmeeinrichtung bezüglich einer senkrechten Projektion des Transportpfads geneigt. Dies ermöglicht, dass das zu entnehmende und das zu übergebende Behältnis besonders nah aneinander vorbeigeführt werden können und so besonders wenig Raum und Zeit für den Austausch dieser Behältnisse in der Behältnisaufnahme derselben Behandlungseinrichtung benötigt wird.

Weitere Vorteile und Ausführungsformen ergeben sich aus den beigefügten Zeichnungen.

Darin zeigen:
- Fig. 1: eine schematische Darstellung einer nicht erfindungsgemäßen Transportvorrichtung mit separaten Einlaufstern und Auslaufstern,
- Fig. 2: eine schematische Darstellung einer erfindungsgemäßen Transportvorrichtung mit auf einem gemeinsamen beweglichen Träger angeordneter Übergabeeinrichtung und Übernahmeeinrichtung,
- Fig. 3: eine weitere schematische Darstellung einer erfindungsgemäßen Transportvorrichtung mit auf einem gemeinsamen beweglichen Träger angeordneter Übergabeeinrichtung und Übernahmeeinrichtung,
- Fig. 4: eine schematische Darstellung einer erfindungsgemäßen Transportvorrichtung mit angedeutetem Transportpfad der Behältnisse,
- Fig. 5: eine schematische Darstellung einer weiteren erfindungsgemäßen Transportvorrichtung mit angedeutetem Transportpfad der Behältnisse,
- Fig. 6a-6f: eine schematische Darstellung verschiedener Zustände einer Übergabeeinrichtung und einer Übernahmeeinrichtung sowie einer Behandlungseinrichtung,
- Fig. 7a: eine schematische Detaildarstellung einer Übergabeeinrichtung und einer Übernahmeeinrichtung zum Zeitpunkt einer Behältnisübergabe,
- Fig. 7b: eine schematische Detaildarstellung einer Übergabeeinrichtung und einer Übernahmeeinrichtung zum Zeitpunkt einer Behältnisübernahme,
- Fig. 8a-8d: eine schematische Darstellung verschiedener Zustände einer Übergabeeinrichtung und einer Übernahmeeinrichtung sowie einer Behandlungseinrichtung,
- Fig. 9a-9c: eine schematische Darstellung verschiedener Zustände einer Übergabeeinrichtung und einer Übernahmeeinrichtung sowie einer Behandlungseinrichtung,
- Fig. 10: eine schematische Darstellung eines Umfangsabschnitts einer Transportvorrichtung und der relativen Positionierung von Übergabeeinrichtung und Übernahmeeinrichtung sowie der Behältnisse.

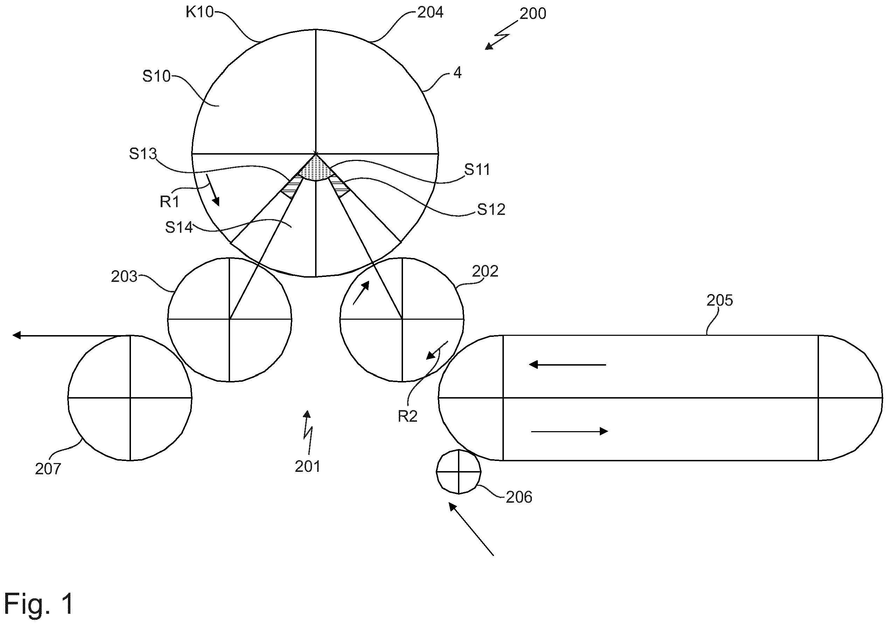

Figur 1 zeigt eine schematische Darstellung einer nicht erfindungsgemäßen Transportvorrichtung 201 mit separaten Einlaufstern 202 und Auslaufstern 203. Bei der ebenfalls dargestellten Behandlungsvorrichtung kann es sich beispielsweise um ein Blasrad 204 handeln, welches mehrere Blasstationen (nicht dargestellt) umfasst. Vorformlinge (nicht dargestellt) werden von dem Einlaufstern 202 an das Blasrad 204 übergeben. Das Blasrad rotiert entlang der Rotationsrichtung R1. Während des Transports durch das Blasrad 204 wird der Vorformling zu einem Behältnis (nicht dargestellt) umgeformt. Die Transportvorrichtung kann Teil einer Anlage 200 sein, welche die Behältnisse weiteren Behandlungsschritten unterzieht. Beispielsweise kann eine Heizvorrichtung 205 vorgesehen sein, welche die Vorformlinge vor deren Umformung auf eine zur Umformung geeignete Temperatur erwärmt. Weitere Transportvorrichtungen 206, 207 können vorgesehen sein, welche Behältnisse zu- oder abführen.

Wie oben dargestellt ist bei derartigen Anlagen nachteilig, dass die Behandlungsvorrichtung 204 vergleichsweise groß ausgebildet sein muss, um einen hohen Behältnisdurchsatz gewährleisten zu können. Dazu sind üblicherweise eine Vielzahl von Behandlungseinrichtungen (nicht gezeigt) vorgesehen, die entlang des Umfangs der Behandlungsvorrichtung angeordnet sind. Die Behandlung der Behältnisse erfolgt jedoch bei derartigen Anlagen nur in einem Behandlungssektor S10 der Behandlungsvorrichtung, da nur in diesem Sektor ein Behältnis in einer Behandlungseinrichtungen angeordnet ist. Dieser Sektor S10 erstreckt sich über einen Großteil des von der Behandlungsvorrichtung definierten Kreises. Die Länge des Kreisbogens K10 des Sektors S10 kann beispielsweise über 80 % des Kreisumfangs U der Behandlungsvorrichtung 204 betragen. Aufgrund des Raumbedarfs von Einlaufstern 202 und Auslaufstern 203 ist jedoch der maximale Anteil des Kreisbogens K10 am Kreisumfangs U selbst bei sehr großen Radien der Behandlungsvorrichtung begrenzt. Es verbleibt somit zwangsläufig ein Sektor S11, in welchem keine Behandlung eines Behältnisses erfolgen kann.

Dieser Sektor S11 setzt sich aus verschiedenen Teilsektoren S12, S13 und S14 zusammen. Im Übergabesektor S12 wird ein Behältnis, beispielsweise ein Vorformling, an eine Behandlungseinrichtung übergeben und die Behandlungseinrichtung für die Behandlung vorbereitet, beispielsweise eine Blasstation geschlossen. Im Übernahmesektor S13 wird die Behandlungseinrichtung für die Entnahme vorbereitet, beispielsweise eine Blasstation geöffnet und anschließend ein Behältnis aus der Behandlungseinrichtung übernommen. Der Sektor S14 liegt zwischen Übernahmesektor S13 und Übergabesektor S12 und kann ebenfalls nicht zur Behandlung eines Behältnisses genutzt werden, da sich kein Behältnis in einer in diesem Sektor befindlichen Behandlungseinrichtung befindet. Somit wird deutlich, dass jede der vergleichsweise aufwändigen und teuren Behandlungseinrichtungen während des Durchlaufs des Sektors S14 ungenutzt bleibt.

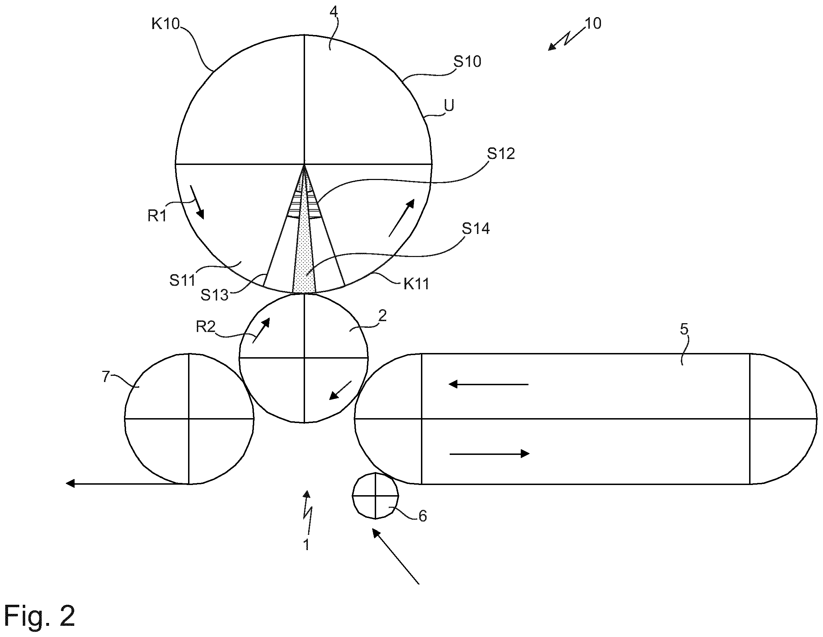

Figur 2 zeigt eine schematische Darstellung einer erfindungsgemäßen Transportvorrichtung 1 mit auf einem gemeinsamen beweglichen Träger angeordneter Übergabeeinrichtung (in Fig. 2 nicht dargestellt) und Übernahmeeinrichtung (in Fig. 2 ebenfalls nicht dargestellt). Weiterhin ist eine Behandlungseinrichtung 4 dargestellt. Bei dieser kann es sich beispielsweise um ein Blasrad handeln. Im Folgenden ist die vorliegende Erfindung an einem Beispiel erläutert, bei welchem die Behandlungseinrichtung ein Blasrad ist. Die Transportvorrichtung 1 ist somit Teil einer Anlage 10, mittels welcher Behältnisse mehreren Prozessen unterzogen werden können. Dementsprechend ist eine Heizvorrichtung 5 vorgesehen, durch welche die Vorformlinge (nicht gezeigt) vor deren Übergabe an die Behandlungseinrichtung 4 auf eine zur Umformung geeignete Temperatur erwärmt werden. Weiterhin ist eine weitere Transportvorrichtung 6 dargestellt, mit welcher Behältnisse der Heizvorrichtung 5 zugeführt werden können. Außerdem ist eine andere Transportvorrichtung 7 dargestellt mit welcher die von der Behandlungsvorrichtung 4 behandelten Behältnisse abgeführt und weiteren nachfolgenden Prozessen zugeführt werden können.

Die Transportvorrichtung 1 umfasst einen einzigen beweglichen Träger 2, mit welchem Behältnisse der Behandlungsvorrichtung 4 sowohl zugeführt als auch von dieser abgeführt werden können. Um gezeigten Beispiel handelt es sich um einen in Rotationsrichtung R2 rotierbaren Träger. Der Drehsinn des beweglichen Träger 2 ist dem Drehsinn in Rotationsrichtung R1 der Behandlungsvorrichtung 4 entgegengesetzt.

Im Vergleich zu, der in Figur 1 dargestellten Anlage 200 wird ersichtlich, dass der Kreisbogens K10 des Behandlungssektor S10, in welchem eine Behandlung eines Behältnisses durch eine Behandlungseinrichtung erfolgen kann, einen wesentlich größeren Anteil des Kreisumfangs U der Behandlungsvorrichtung 4 einnimmt. Dementsprechend ist der Anteil des Sektors S11, in welchem keine Behandlung eines Behältnisses erfolgen kann, vergleichsweise gering. Dies hat zur Folge, dass die Auslastung jeder einzelnen Behandlungseinrichtung höher sein kann. Bevorzugt befindet sich entlang eines Kreisbogens K11 der über 95 %, bevorzugt ≥ 97 %, weiter bevorzugt ≥ 98 %, insbesondere bevorzugt ≥ 99 % des Kreisumfangs U der Behandlungsvorrichtung 4 einnimmt, jeweils ein Behältnis in einer Behandlungseinrichtung angeordnet ist.

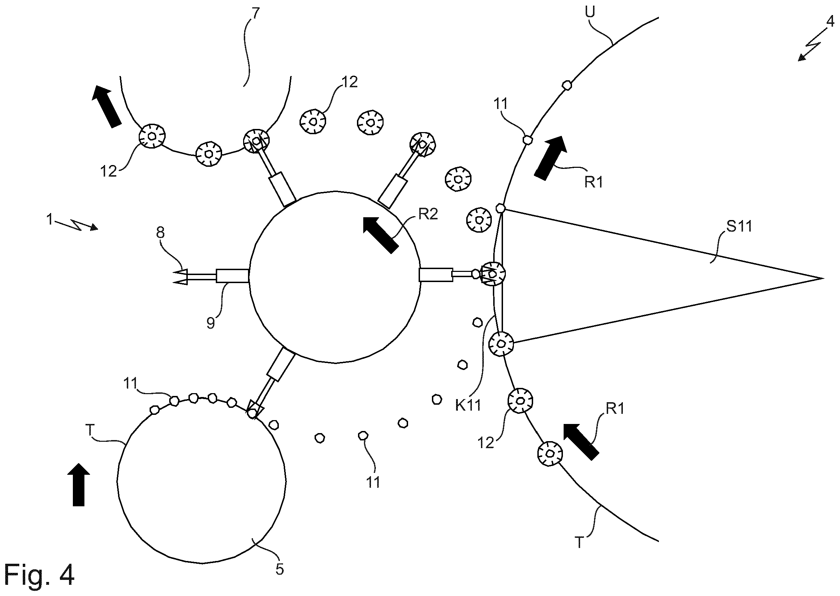

Der Sektor S11, in welchem keine Behandlung eines Behältnisses erfolgen kann, ist vergleichsweise klein. Auch bei der vorliegenden Erfindung setzt sich der Sektor S11 aus einem Übergabesektor S12, einem Übernahmesektor S13 und einem Sektor S14 zusammen, in welchem kein Behältnis in einer in diesem Sektor befindlichen Behandlungseinrichtung angeordnet ist. Der Übergabesektor S12 und der Übernahmesektor S13 sind zu den entsprechenden Sektoren gemäß Fig. 1 vergleichbar groß, da auch gemäß der vorliegenden Erfindung ein Anteil des Transportpfads nicht zur Behandlung des Behältnisses genutzt werden kann, sondern beispielsweise zum Öffnen und Schließen einer Behandlungseinrichtung verwendet werden muss. Ein wesentlicher Unterschied besteht jedoch in der Ausdehnung des Sektors S14, dessen Kreisbogen K14 äußerst schmal gestaltet werden kann und bevorzugt weniger als 5 %, bevorzugt ≤ 3 %, besonders bevorzugt ≤ 2 %, insbesondere bevorzugt ≤ 1 % bezogen auf die Länge des Kreisumfang U der Behandlungsvorrichtung 4 einnimmt. Der Sektor S14 liegt zwischen Übernahmesektor S13 und Übergabesektor S12 und kann ebenfalls nicht zur Behandlung eines Behältnisses genutzt werden, da sich kein Behältnis in einer in diesem Sektor befindlichen Behandlungseinrichtung befindet. Wie insbesondere im Zusammenhang mit Figur 4 erläutert ist, ist die Zeit, in der sich kein Behältnis in einer in diesem Sektor befindlichen Behandlungseinrichtung befindet, äußerst kurz und dementsprechend der Sektor S14 sehr klein.

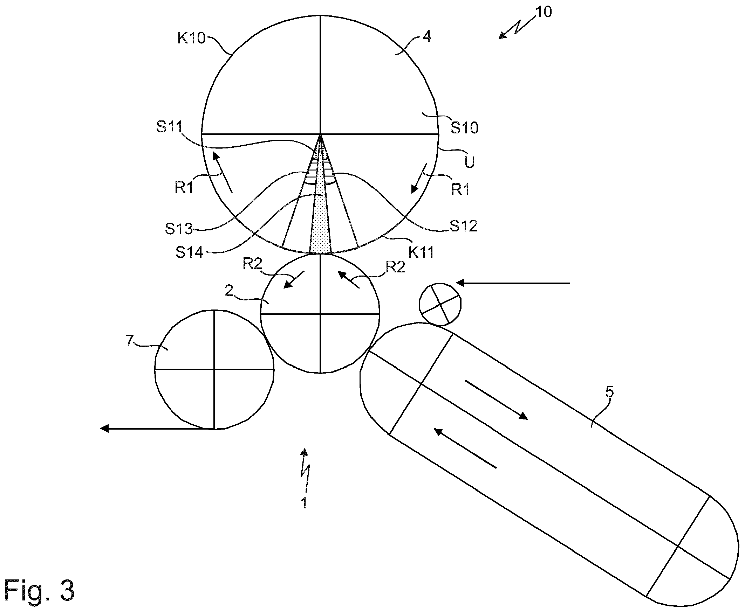

Figur 3 zeigt eine schematische Darstellung einer bezüglich der in Figur 2 gezeigten Anordnung alternative Anordnung einer erfindungsgemäßen Transportvorrichtung 1 mit auf einem gemeinsamen beweglichen Träger 2 angeordneter Übergabeeinrichtung und Übernahmeeinrichtung. Die jeweiligen Einrichtungen entsprechen denjenigen, wie sie auch in Figur 2 dargestellt sind. Aufgrund der unterschiedlichen Anordnung einzelner Anlagenteile zueinander ist es möglich, die Rotationsrichtungen R1 und R2 gegenüber der in Figur 2 dargestellten Ausführungsform zu invertieren.

Dies hat insbesondere hinsichtlich der Verweilzeit der Behältnisse auf dem beweglichen Träger 2 einen Vorteil, da ein Behältnis bei dieser Ausführungsform weder vor dessen Übergabe an eine Behandlungseinrichtung noch nach der Entnahme von der Behandlungsvorrichtung 4 mehr als eine halbe Umdrehung mit dem beweglichen Träger 2 vollführt. Anders als bei der in Figur 2 darstellten Ausführungsform kann beispielsweise ein Vorformling nach der Aufnahme durch eine Übergabeeinrichtung auf dem kürzesten Weg zu der Übergabeposition geführt werden. Wie in Zusammenhang mit Figur 4 beschrieben ist, laufen die Transportpfade der der Behandlungsvorrichtung zuzuführenden Behältnisse (Vorformlinge) und der von der Behandlungsvorrichtung entnommene Behältnisse in keinem Abschnitt parallel, sondern kreuzen sich lediglich einmal im Bereich der Übergabe/Übernahme.

Figur 4 zeigt eine schematische Darstellung einer erfindungsgemäßen Transportvorrichtung 1 in einer Aufsicht mit (durch mögliche Positionen der ersten Behältnisse 11 und zweiten Behältnisse 12) angedeutetem Transportpfad T der Behältnisse 11, 12. Die Anordnung der einzelnen Elemente der Anlage 10 entspricht dabei einem Ausschnitt der in Figur 3 dargestellten Anlage. Dementsprechend ist vorgesehen, dass sich der Transportpfad der (nicht von der Behandlungsvorrichtung 4 behandelten) ersten Behältnisse 11 und der (von der Behandlungsvorrichtung 4 behandelten (beispielsweise umgeformten)) zweiten Behältnisse 12 lediglich kreuzt. Es ist kein längerer Abschnitt des Transportpfads vorgesehen, entlang dessen erste Behältnisse 11 und zweite Behältnisse 12 parallel transportiert werden.

Beispielsweise von einer Heizvorrichtung 5 werden erste Behältnisse 11 von einer Transportvorrichtung 1 übernommen. Dazu weist die Transportvorrichtung 1 mehrere Halteelemente 8 auf, welche zur temporären Halterung eines Behältnisses 11, 12 bestimmt und vorgesehen sind. Jedes der Halteelemente 8 ist an dem beweglichen Träger 2 durch ein Verbindungselement 9 angeordnet. Jedes Verbindungselement 9 ist bevorzugt so ausgestaltet, dass das daran befindliche Halteelement 8 bezüglich des beweglichen Trägers 2 relativbeweglich ist.

Nach der Aufnahme eines erste Behältnisses 11 durch ein Halteelement 8 wird das Behältnis 11 durch die Bewegung des beweglichen Trägers 2 auf eine Behandlungsvorrichtung 4 zu bewegt. Der Transportpfad T ist in diesem Bereich nicht explizit gezeigt, sondern durch mögliche Positionen der ersten Behältnisse 11 entlang dieses Transportpfads T angedeutet. Im Bereich der größten Annäherung an die Behandlungsvorrichtung 4 erfolgt eine radiale Verschiebung des ersten Behältnisses 11 bezüglich des beweglichen Trägers 2. Dadurch kann es in eine (hier nicht gezeigte) Behältnisaufnahme einer an der Behandlungsvorrichtung 4 angeordneten Behandlungseinrichtung (nicht im Detail dargestellt) eingeführt werden. Dazu wird das erste Behältnis 11 vor der Übergabe an die Behandlungsvorrichtung 4 bevorzugt angehoben, also auf eine Ebene geführt, die über der Papierebene, der in Figur 4 dargestellten Projektion liegt. Dies ist durch die abschnittsweise Überdeckung des auf oder unterhalb der Papierebene der in Figur 4 dargestellten Projektion liegenden - also bevorzugt (zumindest gegenüber dem ersten Behältnis) abgesenkten - zweiten Behältnisses 12 im Bereich der Übergabe/Übernahme an/von der Behandlungsvorrichtung 4 angedeutet.

Der Transportpfad T setzt sich entlang eines Umfangs U der Behandlungsvorrichtung 4 fort. Die ersten Behältnisse 11 werden von der beweglichen (hier rotierenden) Behandlungsvorrichtung 4 in Richtung R1 weitergeführt und solange sich das erste Behältnis 11 im Sektor S11 befindet für die Behandlung vorbereitet. Die eigentliche Behandlung des ersten Behältnisses 11 beginnt erst nach Verlassen des Sektors S11.

Die Behandlung der ersten Behältnisse 11 erfolgt während deren Transports durch die Behandlungsvorrichtung 4. Bevorzugt nach annähernd einer Umdrehung der Behandlungsvorrichtung 4 sind die ersten Behältnisse 11 zu zweiten Behältnissen 12 behandelt (beispielsweise befüllt, sterilisiert oder umgeformt) worden. Dabei ist die Behandlung abgeschlossen, bevor das zweite Behältnis 12 in den Sektor S11 eingefahren wird. Nach Eintritt in den Sektor S11 beginnt ein Prozess der Nachbereitung der Behandlung. Dabei kann es sich beispielsweise um das Öffnen einer Blasstation handeln.

Nach der Übernahme eines zweiten Behältnisses 12 durch ein Halteelement 8 wird das Behältnis 12 durch die Bewegung des beweglichen (hier in Richtung R2 rotierbaren) Trägers 2 von der Behandlungsvorrichtung 4 entfernt. Der Transportpfad T ist in diesem Bereich ebenfalls nicht explizit gezeigt, sondern durch mögliche Positionen der zweiten Behältnisse 12 entlang des Transportpfads T angedeutet. Zum Entfernen von der Behandlungsvorrichtung 4 ist eine radiale Verschiebung des zweiten Behältnisses 12 bezüglich des beweglichen Trägers 2 vorgesehen. Dadurch wird ermöglicht, dass das zweite Behältnis aus einer (hier nicht gezeigten) Behältnisaufnahme einer an der Behandlungsvorrichtung 4 angeordneten Behandlungseinrichtung (nicht im Detail dargestellt) herausgezogen wird. Dazu wird das zweite Behältnis 12 auf einer Ebene geführt, die in oder unterhalb der Papierebene, der in Figur 4 dargestellten Projektion liegt. Dementsprechend ist das zweite Behältnis 12 im Bereich der Übergabe/Übernahme an/von der Behandlungsvorrichtung 4 von dem ersten Behältnis 11 abschnittsweise überdeckt dargestellt.

Nach der Übernahme eines zweiten Behältnisses 12 durch die Transportvorrichtung 1 wird das Behältnis 12 durch die Bewegung des beweglichen Trägers 2 in Richtung einer weiteren Behandlungsvorrichtung und/oder einer weiteren Transportvorrichtung 7 bewegt.

Der Sektor S11, in welchem keine Behandlung des Behältnisses stattfindet ist äußerst schmal und setzt sich im Wesentlichen aus zwei Sektoren (S2 und S13, hier nicht gezeigt) zusammen in welchen eine Vor- oder Nachbereitung der Behandlung erfolgt.

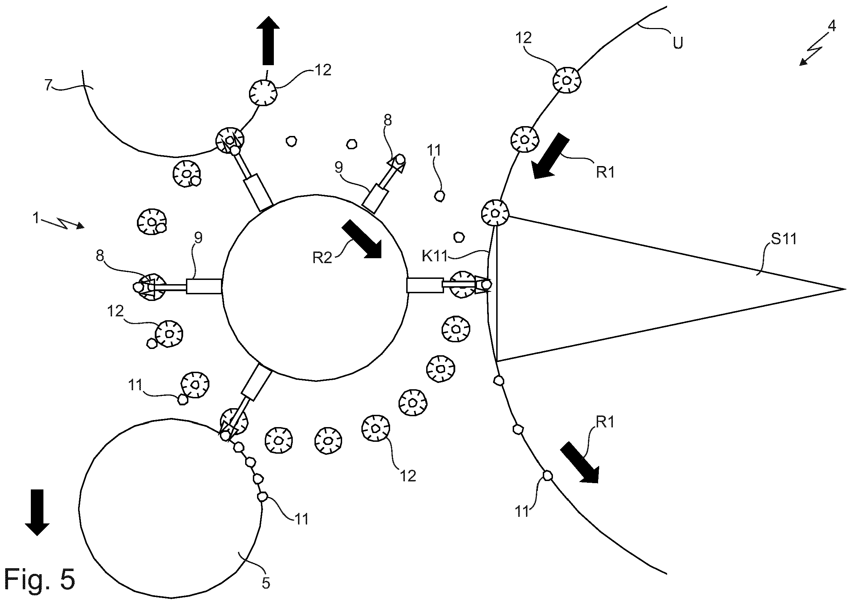

Figur 5 zeigt eine zu der in Figur 4 gezeigten Darstellung analoge schematische Darstellung einer erfindungsgemäßen Transportvorrichtung 1 in einer Aufsicht mit (durch mögliche Positionen der ersten Behältnisse 11 und zweiten Behältnisse 12) angedeutetem Transportpfad T der Behältnisse 11, 12. Anders als in der in Figur 4 gezeigten Darstellung entspricht die Anordnung der einzelnen Elemente der Anlage jedoch einem Ausschnitt der in Figur 2 dargestellten Anlage. Es ist somit vorgesehen, dass sich der Transportpfad (oder eine senkrechte Projektion des Transportpfads) der (nicht von der Behandlungsvorrichtung 4 behandelten) ersten Behältnisse 11 und der (von der Behandlungsvorrichtung 4 behandelten (beispielsweise umgeformten)) zweiten Behältnisse 12 abschnittsweise parallel verläuft. Dieser Abschnitt ist auf der der Übergabe/Übernahme an/von der Behandlungsvorrichtung 4 gegenüberliegenden Seite der Transportvorrichtung 1 angeordnet.

Analog zur in Figur 4 dargestellten Ausführungsform werden erste Behältnisse 11 beispielsweise von einer Heizvorrichtung 5 durch die Transportvorrichtung 1 übernommen. Sie werden dazu von jeweils einem Halteelement 8 gehalten. Jedes Halteelement 8 ist über ein Verbindungselement 9 mit dem beweglichen Träger 2 relativbeweglich zu diesem verbunden. Nach der Aufnahme eines erste Behältnisses 11 durch ein Halteelement 8 wird das Behältnis 11 durch die Bewegung des beweglichen Trägers 2 entlang dessen Umfangsrichtung zu einem Übergabebereich geführt, in welchem die Übergabe an eine Behandlungsvorrichtung 4 erfolgt.

Zumindest im Übergabebereich erfolgt eine radiale Verschiebung des ersten Behältnisses 11 bezüglich des beweglichen Trägers 2, wodurch das erste Behältnis 11 in eine (hier nicht gezeigte) Behältnisaufnahme einer an der Behandlungsvorrichtung 4 angeordneten Behandlungseinrichtung (nicht im Detail dargestellt) eingeführt werden kann. Vor dem Einführen in die Behältnisaufnahme ist bevorzugt vorgesehen, dass das erste Behältnis 11 angehoben wird. Diesbezüglich wird auf die Ausführungen gemäß Figur 4 verwiesen.

Nach der Übergabe des ersten Behältnisses 11 an die bewegliche (hier rotierende) Behandlungsvorrichtung 4 erfolgt zunächst die Vorbereitung des Behandlungsprozesses in Sektor S11. Erst nachdem das erste Behältnis den Sektor S11 verlassen hat, erfolgt die Behandlung, welche bevorzugt nach annähernd einer Umdrehung der Behandlungsvorrichtung 4 abgeschlossen ist. Nach dem Abschluss der Behandlung tritt das behandelte zweite Behältnis 12 in den Sektor S11 ein, woraufhin ein Prozess der Nachbereitung der Behandlung beginnt, beispielsweise das Öffnen einer Blasstation.

Anschließend wird das zweite Behältnis 12 durch ein Halteelement 8 übernommen und durch die Bewegung des beweglichen (hier in Richtung R2 rotierbaren) Trägers 2 von der Behandlungsvorrichtung 4 entfernt. Bezüglich der Radialverschiebung bezüglich des beweglichen Trägers 2 und der Anordnung unterhalb einer Ebene, in der die ersten Behältnisse geführt werden, wird auf die Ausführungen zu Figur 4 Bezug genommen.

Auch bei der in Figur 5 dargestellten Ausführungsform ist es möglich, den Sektor S11, in welchem keine Behandlung des Behältnisses stattfindet äußerst schmal zu gestalten, da er sich im Wesentlichen aus den zwei (hier nicht gezeigten) Sektoren S12 und S13 zusammensetzt, in welchen eine Vor- oder Nachbereitung der Behandlung erfolgt. Der (hier ebenfalls nicht gezeigte Sektor S14, in welchem das zweite Behältnis 12 schon aus eine Behandlungseinrichtung entnommen wurde, das erste Behältnis 11 jedoch noch nicht in diese eingebracht wurde kann äußerst schmal ausgeführt sein.

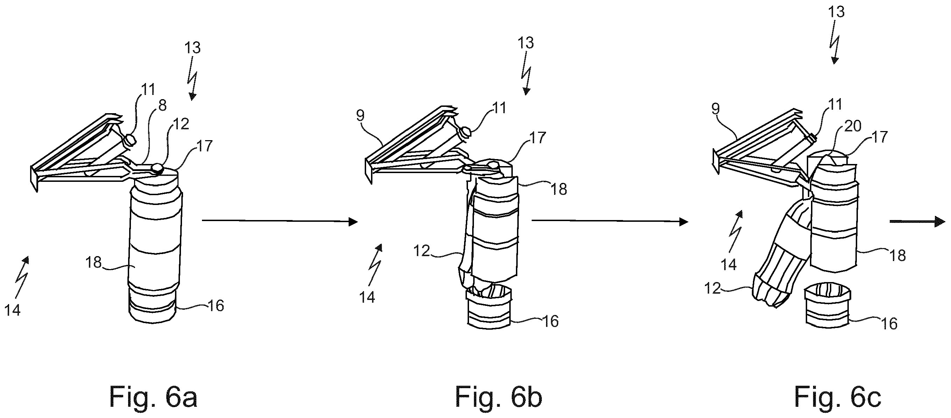

Die Figuren 6a - 6f zeigen eine schematische Darstellung verschiedener Zustände einer Übergabeeinrichtung 13 und einer Übernahmeeinrichtung 14 sowie einer Behandlungseinrichtung 15.

Wie in Figur 6a dargestellt beginnt der Austausch der Behältnisse in einer Behandlungseinrichtung 15 mit dem Greifen des behandelten zweiten Behältnisses 12 durch eine Halteeinrichtung 8 der Übernahmeeinrichtung 14. Dies erfolgt während die Behandlungseinrichtung 15 eine Bewegung der (hier nicht gezeigten) Behandlungsvorrichtung 4 folgt. Die hier gezeigte Behandlungseinrichtung 15 ist eine Blasform, welche eine erste Blasformhälfte 17 und eine zweite Blasformhälfte 18 sowie ein Bodenteil 16 umfasst.

Ein erstes Behältnis 11 wird zu diesem Zeitpunkt von einer Übergabeeinrichtung 13 bereitgestellt und in die Nähe der Behandlungseinrichtung 15 gebracht. Wie in Figur 6a gezeigt, ist dabei das ersten Behältnis 11 bevorzugt entlang seiner Längsachs bezüglich der vertikalen Richtung geneigt, um eine möglichst große Annäherung an die Behältnisaufnahme der Behandlungseinrichtung 15 zu ermöglichen.

Figur 6b zeigt, dass anschließend die Behandlungseinrichtung 15 geöffnet wird. Dazu wird zunächst das Bodenteil 16 von den Blasformhälften 17, 18 beabstandet und anschließend die beiden Blasformhälften 17, 18 zumindest abschnittsweise (beispielsweise buchartig) voneinander entfernt. Das behandelte Behältnis 12 wird von der Halteeinrichtung 8 der Übernahmeeinrichtung 14 gehalten und nach unten aus der Behandlungseinrichtung 15 herausgeführt. Bevorzugt erfolgt auch bei dieser Bewegung eine Neigung der Längsachse des Behältnisses bezüglich der Vertikalen, um dieses vom Bodenteil 16 fern zu halten.

Das erste Behältnis 11 wird durch die Übergabeeinrichtung 13 weiter der Behandlungseinrichtung 15 angenähert. Um die Annäherung zeitgleich mit der Bewegung behandelten Behältnisses durch die Übernahmeeinrichtung 14 zu ermöglichen, hat es sich als besondere vorteilhaft erwiesen, das Verbindungselement 9 der Übernahmeeinrichtung 14 mehrteilig auszubilden, so dass das Verbindungselement 9 der Übergabeeinrichtung 13 und/oder das erste Behältnis 11 zumindest zeitweise zwischen den beiden Teilen des Verbindungselements 9 der Übernahmeeinrichtung 14 positioniert sein kann. Bei der dargestellten bevorzugten Ausgestaltung sind die beiden Teile des Verbindungselements 9 der Übernahmeeinrichtung 14 so weit voneinander beanstandet, dass nicht nur das Verbindungselement 9 der Übergabeeinrichtung 13, sondern auch das erste Behältnis 11 zeitweise zwischen diesen beiden Teile des Verbindungselements 9 der Übernahmeeinrichtung 14 anordenbar ist.

Figur 6c zeigt einen weiteren Fortschritt des Prozesses zum Austausch des zweiten Behältnisses 12 durch ein ersten Behältnis 11 in einer Behandlungseinrichtung 15. Gegenüber der in Figur 6b dargestellten Situation ist das Bodenteil 16 weiter von den Blasformhälften 17, 18 beabstandet und auch die beiden Blasformhälften 17, 18 weiter voneinander entfernt. Das behandelte zweite Behältnis 12 ist ebenfalls weiter aus der Behandlungseinrichtung 15 herausgeführt und das erste Behältnis 11 näher an der Behältnisaufnahme 20 der Behandlungseinrichtung 15 angeordnet. Die Neigung der Längsachse des ersten Behältnisses 11 gegenüber der Vertikalen ist verringert, um dessen senkrechte Positionierung in der Behandlungseinrichtung 15 zu ermöglichen.

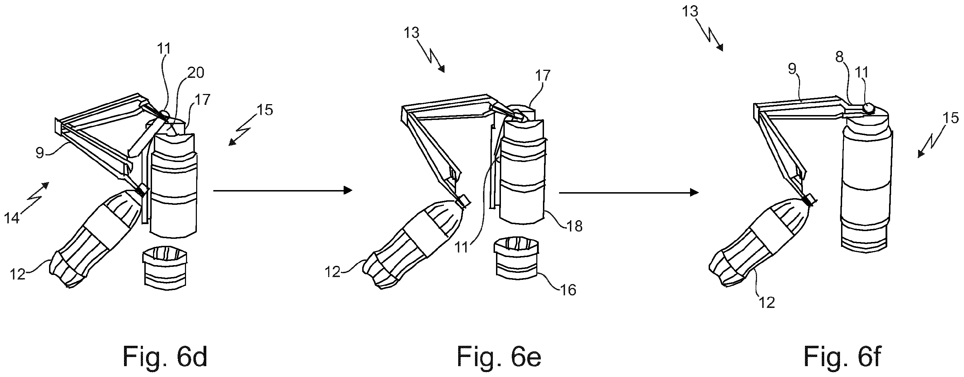

Figur 6d zeigt einen noch weiter fortgeschrittenen Prozess des Austauschs des zweiten Behältnisses 12 durch ein ersten Behältnis 11 in einer Behandlungseinrichtung 15. Das behandelte zweite Behältnis 12 ist bereits vollständig aus der Behandlungseinrichtung 15 herausgeführt worden und so weit abgesenkt worden, dass das erste Behältnis nicht mehr zwischen Teilen des Verbindungselements 9 der Übernahmeeinrichtung 14 angeordnet ist. Da das erste Behältnis 11 einen gegenüber dem zweiten Behältnis deutlich verringerten Durchmesser aufweist kann bereits mit dem Schließen der Behandlungseinrichtung 15 begonnen werden. Das Einführen des ersten Behältnisses 11 in die Behandlungseinrichtung 15 hat bereits begonnen und die Neigung der Längsachse des ersten Behältnisses 11 gegenüber der Vertikalen ist weiter verringert.

Figur 6e zeigt einen gegenüber der in Figur 6d dargestellten Situation noch weiter forstgeschrittenen Prozess zum Austausch des zweiten Behältnisses 12 durch ein ersten Behältnis 11 in einer Behandlungseinrichtung 15. Da das zweite Behältnis bereits vollständig aus dem Bereich der Behandlungseinrichtung 15 entfernt ist, kann das Bodenteil 16 wieder den Blasformhälften 17, 18 angenähert werden. Auch die beiden Blasformhälften 17, 18 können wieder aufeinander zu bewegt werden. Die Neigung der Längsachse des ersten Behältnisses 11 gegenüber der Vertikalen ist weiter verringert. Es befindet sich (nahezu) vollständig im Bereich zwischen den Blasformhälften 17, 18.

Zum Abschluss des Austauschs des zweiten Behältnisses 12 durch ein ersten Behältnis 11 in einer Behandlungseinrichtung 15 wird wie in Figur 6f dargestellt die Behandlungseinrichtung 15 geschlossen und so das erste Behältnis 11 durch die Behältnisaufnahme 20 der Behandlungseinrichtung 15 gehalten. Dazu sind die Blasformhälften 17, 18 vollständig aufeinander zu bewegt worden, so dass diese sich kontaktieren. Auch das Bodenteil 16 ist auf die Blasformhälften 17, 18 zugestellt worden und verschließt so die Behandlungseinrichtung 15 unterseitig. Wie der Stellung der an den Verbindungselementen 9 der Übergabeeinrichtung 13 angeordneten Halteeinrichtung 8 zu erkenne ist, ist die Längsachse des ersten Behältnisses 11 nun parallel zu der Vertikalen ausgerichtet. Der Austausch der Behältnisse 11, 12 in einer Behandlungseinrichtung 15 ist damit abgeschlossen und die Behandlung des neu eingeführten ersten Behältnisses 11 kann erfolgen.

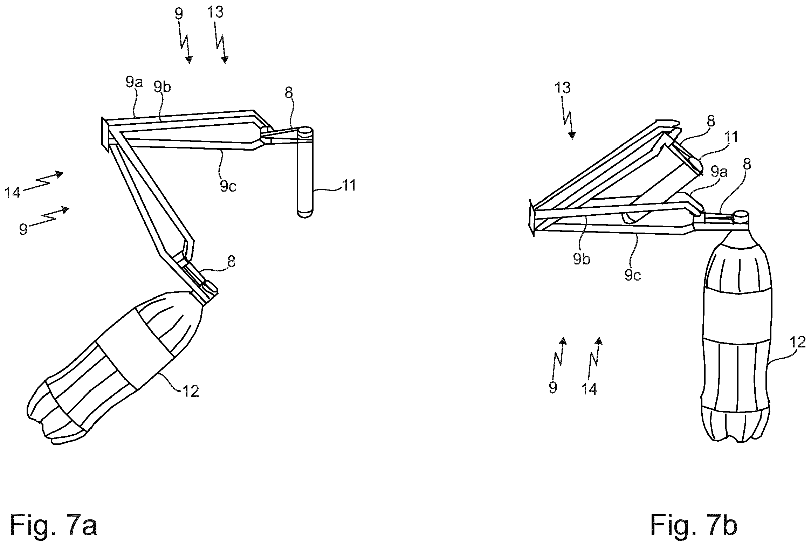

Zur besseren Veranschaulichung zeigen die Figuren 7a und 7b die in den Figuren 6f und 6a dargestellten Situationen, ohne die Behandlungseinrichtung 15 darzustellen. Figur 7a zeigt somit eine schematische Detaildarstellung einer Übergabeeinrichtung 13 und einer Übernahmeeinrichtung 14 zum Zeitpunkt einer Behältnisübergabe, Figur 7b eine schematische Detaildarstellung einer Übergabeeinrichtung 13 und einer Übernahmeeinrichtung 14 zum Zeitpunkt einer Behältnisübernahme. Die Darstellung gemäß Figur 7b entspricht dabei der in Figur 6a dargestellten Situation, die in den Figur 7a dargestellte Situation derjenigen aus Figuren 6f.

Figur 7b zeigt, dass ein behandeltes zweites Behältnisses 12 durch eine Halteeinrichtung 8 der Übernahmeeinrichtung 14 erfasst ist. Zusätzlich zur Halteeinrichtung 8 umfasst die Übernahmeeinrichtung 14 auch ein mehrteilig ausgebildetes Verbindungselement 9. Dieses umfasst im gezeigten Beispiel zumindest die Verbindungselemente 9a, 9b und 9c. Mindestens zwei dieser Verbindungselemente 9a, 9b sind zumindest abschnittsweise in horizontaler Richtung voneinander beabstandet. Mindestens zwei dieser Verbindungselemente 9b, 9c sind zumindest abschnittsweise in vertikaler Richtung voneinander beabstandet. Durch die vertikale Beabstandung mindestes zweier der Verbindungselemente 9a, 9b und 9c kann gewährleistet werden, dass die zugehordnete Halteeinrichtung 8 neigbar ist. Die horizontale Beabstandung mindestes zweier der Verbindungselemente 9a, 9b und 9c gewährleistet, dass ein erstes Behältnis 11 und/oder Abschnitte der Übergabeeinrichtung 13 zwischen diesen Verbindungselementen 9a, 9b und 9c angeordnet sein kann. Dadurch kann wiederum erreicht werden, dass - wie in Figuren 7b und 6a gezeigt - bereits zu Beginn des Austauschs zweiter Behältnisse 12, 11 in einer Behandlungseinrichtung (hier nicht gezeigt) das erste Behältnis 11 besonders nah an das zweite Behältnis 12 herangeführt werden kann. Dies ist vorteilhaft für die Geschwindigkeit des Austauschs.

Figur 7a zeigt die Anordnung der Behältnisse 11, 12 sowie der zugeordneten Übernahmeeinrichtung 14 und Übergabeeinrichtung 13 zum Abschluss des Austauschs des zweiten Behältnisses 12 durch ein ersten Behältnis 11 in einer (nicht dargestellten) Behandlungseinrichtung analog zu Figur 6f. Das in Figur 7b und 6a mit einer bezüglich der Vertikalen geneigten Längsachse dargestellte erste Behältnis ist nun senkrecht ausgerichtet dargestellt. Die Neigung und Rückführung in die Senkrechte wird durch eine mehrteilige Ausgestaltung des Verbindungselements 9 erreicht. Auch wenn im gezeigten Beispiel drei derartige Verbindungselemente 9a, 9b und 9c dargestellt sind, sind mindestens zwei Verbindungselemente 9 bevorzugt, da bereits zwei Verbindungselemente 9 die Möglichkeit der Neigung der Halteeinrichtung 8 ermöglichen. Bei der zweiteiligen Ausführung des Verbindungselements 9 kann dieses schmaler ausgeführt sein und so besonders einfach zumindest abschnittsweise zwischen Verbindungselementen 9 der Übernahmeeinrichtung 14 hindurchgeführt werden.

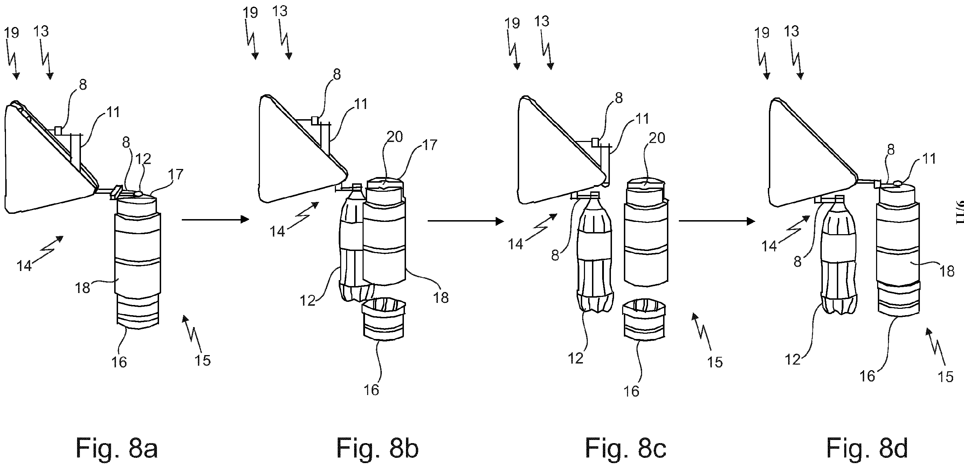

Die Figuren 8a - 8d zeigen eine schematische Darstellung einer anderen Ausführungsform bei verschiedenen Zuständen einer Übergabeeinrichtung 13 und einer Übernahmeeinrichtung 14 sowie einer Behandlungseinrichtung 15.

Wie in Figur 8a dargestellt beginnt der Austausch der Behältnisse 11, 12 in einer Behandlungseinrichtung 15 analog zu der in Figur 6a dargestellten Variante mit dem Greifen des behandelten zweiten Behältnisses 12 durch eine Halteeinrichtung 8 der Übernahmeeinrichtung 14. Im Gegensatz zu der in Figur 6a - 7b dargestellten Ausführungsform ist vorgesehen, dass die Übergabeeinrichtung 13 und die Übernahmeeinrichtung 14 in einer Führung 19 und/oder Schiene geführt werden. Diese hat im gezeigten Beispiel eine etwa dreieckige Form und bildet eine geschlossene Bahn. Bei dieser Ausgestaltung ist das besonders nahe Heranführen des ersten Behältnisses an die Behandlungseinrichtung 15 auch ohne Neigung des ersten Behältnisses 11 möglich. Es wird bevorzugt auf einer sich von schräg oben an die Behandlungseinrichtung 15 annähernden Trajektorie geführt. Diese Annäherung erfolgt während die Behandlungseinrichtung 15 eine Bewegung der (hier nicht gezeigten) Behandlungsvorrichtung 4 folgt. Die hier gezeigte Behandlungseinrichtung 15 ist erneut eine Blasform, welche eine erste Blasformhälfte 17 und eine zweite Blasformhälfte 18 sowie ein Bodenteil 16 umfasst. Sie ist in dem in Figur 8a gezeigten Zustand noch geschlossen.

Ein erstes Behältnis 11 wird von einer Halteeinrichtung 8 der Übergabeeinrichtung 13 gehalten und entlang der oben beschriebenen Bahn in die Nähe der Behandlungseinrichtung 15 gebracht.

Figur 8b zeigt die Behandlungseinrichtung 15 in einem geöffneten Zustand, bei dem das Bodenteil 16 von den Blasformhälften 17, 18 beabstandet ist und auch die beiden Blasformhälften 17, 18 voneinander entfernt sind. Das behandelte Behältnis 12 wird von der Halteeinrichtung 8 der Übernahmeeinrichtung 14 gehalten und entlang eines nahezu waagerecht verlaufenden Schenkels der Bahn 19 aus der Behandlungseinrichtung 15 (in radialer Richtung bezüglich der nicht gezeigten Behandlungsvorrichtung) herausgeführt. Durch das nahezu waagerechte herausziehen kann gewährleistet werden, dass das zweite Behältnis 12 ausreichend Abstand vom Bodenteil 16 einhält.

Figur 8c zeigt einen weiter fortgeschrittenen Prozess des Austauschs des zweiten Behältnisses 12 durch ein ersten Behältnis 11 in einer Behandlungseinrichtung 15. Das behandelte zweite Behältnis 12 ist bereits vollständig aus der Behandlungseinrichtung 15 herausgeführt worden. Das erste Behältnis 11 ist entlang der Bahn 19 weiter in Richtung der Behandlungseinrichtung 15 verschoben worden und dieser bereits näher als das zweite Behältnis 12.

Figur 8d zeigt die Situation zum Abschluss des Austauschs des zweiten Behältnisses 12 durch ein ersten Behältnis 11 in einer Behandlungseinrichtung 15. Die Behandlungseinrichtung 15 ist bereits geschlossen und so das erste Behältnis 11 durch die Behältnisaufnahme 20 der Behandlungseinrichtung 15 gehalten. Dazu sind die Blasformhälften 17, 18 vollständig aufeinander zu bewegt worden, so dass diese sich kontaktieren. Das Bodenteil 16 ist in der gezeigten Situation noch beabstandet, kann aber nun auf die geschlossenen Blasformhälften 17, 18 zugestellt werden und so die Behandlungseinrichtung 15 unterseitig verschließen. Das zweite Behältnis 12 wird weiterhin von der Halteeinrichtung 8 der Übernahmeeinrichtung 14 gehalten und ist entlang der Bahn 19 weiter von der Behandlungseinrichtung 15 weg geführt worden. Der Austausch der Behältnisse 11, 12 in einer Behandlungseinrichtung 15 ist damit abgeschlossen und die Behandlung des neu eingeführten ersten Behältnisses 11 kann erfolgen.

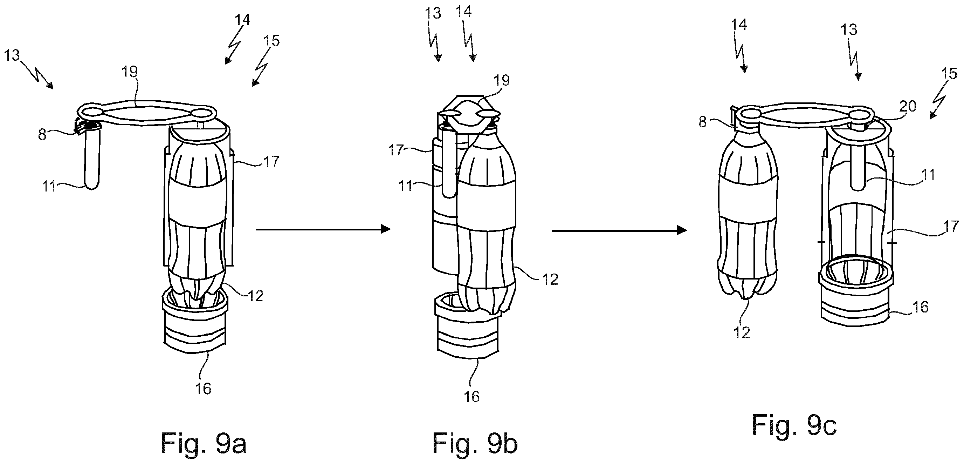

Die Figuren 9a - 9c zeigen eine schematische Darstellung einer weiteren Ausführungsform bei verschiedenen Zuständen einer Übergabeeinrichtung 13 und einer Übernahmeeinrichtung 14 sowie einer Behandlungseinrichtung 15.

Wie in Figur 9a dargestellt ist, beginnt der Austausch der Behältnisse 11, 12 in einer Behandlungseinrichtung 15 analog zu der in Figur 6a und 8a dargestellten Variante mit dem Greifen des behandelten zweiten Behältnisses 12 durch eine Halteeinrichtung 8 der Übernahmeeinrichtung 14. Wie auch bei der in Figur 9a - 9d dargestellten Ausführungsform ist vorgesehen, dass die Übergabeeinrichtung 13 und die Übernahmeeinrichtung 14 in einer Führung und/oder Schiene 19 geführt werden. Diese bildet ebenfalls eine geschlossene Bahn, hat jedoch im Gegensatz zu der oben beschriebenen Ausführungsform eine ovale Form. Auch bei dieser Ausgestaltung werden die ersten Behältnisse 11 ohne Neigung bezüglich deren Längsachse an die Behandlungseinrichtung 15 herangeführt. Gleichzeitig wird über einen anderen Abschnitt der Führung und/oder Schiene 19 das behandelte zweite Behältnis aus der Behandlungseinrichtung 15 abgeführt. Auch das Abführen der behandelten zweiten Behältnisse 12 erfolgt senkrecht. Zur besseren Veranschaulichung ist von der Behandlungseinrichtung 15 lediglich eine erste Blasformhälfte 17 und ein Bodenteil 16 dargestellt. Zumindest das Bodenteil ist, in dem in Figur 9a gezeigten Zustand, bereits vom zweiten Behältnis entfernt worden.

Figur 9b zeigt eine auf den in Figur 9a dargestellten zustand folgende Situation aus einer anderen Perspektive, nämlich in radialer Richtung bezüglich des (nicht gezeigten) beweglichen Trägers. Die nur durch eine erste Blasformhälfte 17 und das Bodenteil 16 angedeutete Behandlungseinrichtung 15 ist geöffnet in geöffnet und das behandelte zweite Behältnis 12 bereits durch die Halteeinrichtung 8 der Übernahmeeinrichtung 14 gehalten und entlang der Bahn 19 aus der Behandlungseinrichtung 15 herausgeführt. Das zweite Behältnis 12 wird waagerecht herausgezogen, um ausreichend Abstand zum Bodenteil 16 einzuhalten. Das erste Behältnis 11 ist entlang der Bahn 19 in Richtung der Behandlungseinrichtung 15 verschoben worden. Die Behältnisse 11 und 12 befinden sich in einem Bereich der Führung und/oder Schiene 19, in dem die gegenüberliegenden Abschnitte einen minimalen Abstand aufweisen. Dennoch ist es in der gezeigten Ausführungsform möglich, die beiden Behältnisse 11 und 12 aneinander vorbei zu führen, ohne dass sie sich berühren. Dies liegt insbesondere daran, dass im gezeigten Beispiel die Behandlungseinrichtung 15 eine Blasstation ist, der ein Vorformling 11 zugeführt wird, der einen deutlich geringeren Durchmesser aufweist als das zu einer Flasche umgeformte zweite Behältnis 12.

Figur 9c zeigt die Situation zum Abschluss des Austauschs des zweiten Behältnisses 12 durch ein ersten Behältnis 11 in einer Behandlungseinrichtung 15. Auch wenn erneut nur eine erste Blasformhälfte 17 und das Bodenteil 16 dargestellt sind, ist an der geschlossenen Behältnisaufnahme 20 zu erkennen, dass die Behandlungseinrichtung 15 ist bereits geschlossen ist, lediglich das Bodenteil 16 ist noch nicht auf die Blasformhälften 17, 18 zugestellt worden. Das zweite Behältnis 12 wird von der Halteeinrichtung 8 gehalten und ist durch die Übernahmeeinrichtung 14 entlang der Bahn 19 bis zum von der Behandlungseinrichtung 15 entferntesten Bereich verschoben worden. Der Austausch der Behältnisse 11, 12 in einer Behandlungseinrichtung 15 ist damit abgeschlossen und die Behandlung des neu eingeführten ersten Behältnisses 11 kann erfolgen.

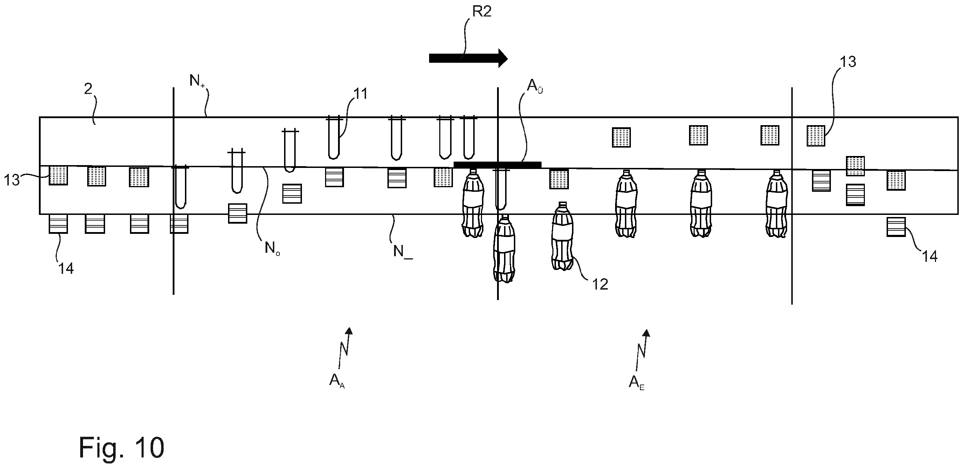

Figur 10 ist eine schematische Darstellung eines Umfangsabschnitts einer Ausführungsform einer Transportvorrichtung 1 und der relativen Positionierung von Übergabeeinrichtung 13 und Übernahmeeinrichtung 14 sowie der Behältnisse 11, 12. Diese Darstellung könnte beispielsweise die vertikale Verschiebung der Behältnisse 11, 12 während des Transports mit einer Transportvorrichtung beschreiben, wie sie in Figuren 4 und 6 - 8 dargestellt ist.

Der dargestellte Umfangsabschnitt umfasst einen der Annäherungsabschnitt A_{A}, in welchem ein zu behandelndes ersten Behältnis 11 einer (nicht gezeigten) Behandlungsvorrichtung angenähert wird, einen Übernahme-Übergabe-Abschnitt A_{Ü}, in welchem ein zweites Behältnis 12 von der der Behandlungsvorrichtung übernommen und ein erstes Behältnis 11 an die Behandlungsvorrichtung übergeben wird, sowie einen Entfernungsabschnitt A_{E}, in welchem das entnommene zweite Behältnis 12 von der Behandlungsvorrichtung entfernt wird. Aufgrund der Rotation des beweglichen Trägers 2 entlang der Rotationsrichtung R2 werden die oben genannten Abschnitte A_{A}, A_{Ü} und A_{E} in dieser Reihenfolge durchlaufen, wobei sich diese Abschnitte auch abschnittsweise überlappen können.

Währen diese Abschnitte A_{A}, A_{Ü} und A_{E} durchlaufen werden, nehmen die Übergabeeinrichtung 13 und die Übernameeinrichtung 14 jeweils verschiedene Höhenniveaus N₊, N₀, N₋ oder dazwischenliegende Niveaus ein, die sich in Ihrer Lage senkrecht zur Umfangsrichtung unterscheiden. N₊ stellt dabei ein maximales Höhenniveau dar, N₀ ein mittleres Höhenniveau und N₋ ein minimales Höhenniveau, wobei sich diese Angabe jeweils auf die Position eines nicht gezeigten Haltelements bezieht, welches jeweils an der Übergabeeinrichtung 13 und der Übernameeinrichtung 14 angeordnet ist.

Vor dem Eintritt einer Übergabeeinrichtung 13 in den Annäherungsabschnitt A_{A} hält es kein Behältnis, das Haltelement ist also frei und zur Aufnahme eines ersten Behältnisses 11 bereit. Beim Eintritt in den Annäherungsabschnitt A_{A} befindet sich die Übergabeeinrichtung 13 auf dem mittleren Höhenniveau N₀ und übernimmt ein erstes Behältnis 11 von einer nicht gezeigten Zuführeinrichtung. Dieses erste Behältnis 11 wird von der Übergabeeinrichtung 13 weitertransportiert und auf die Behandlungsvorrichtung zu bewegt. Die Übernameeinrichtung 14, die gemeinsam mit der Übergabeeinrichtung 13 in den Annäherungsabschnitt A_{A} eintritt, befindet sich auf dem minimalen Höhenniveau N₋ und hält kein Behältnis.

Während des Durchlaufs des Annäherungsabschnitts A_{A} werden sowohl Übergabeeinrichtung 13 - und damit auch das erste Behältnis 11 - als auch Übernameeinrichtung 14 angehoben, so dass sie sich die Übergabeeinrichtung 13 zumindest zeitweise auf dem maximalen Höhenniveau N₊ befindet und die Übernameeinrichtung 14 auf dem mittleren Höhenniveau N₀.

Tritt das Paar aus Übergabeeinrichtung 13 und Übernameeinrichtung 14 in den Übernahme-Übergabe-Abschnitt A_{Ü} ein, ist die Übernameeinrichtung 14 auf dem mittleren Höhenniveau N₀. Auf diesem mittleren Niveau N₀ kann sie ein zweites Behältnis 12 greifen, um dieses von der Behandlungsvorrichtung zu übernehmen. Die Übergabeeinrichtung 13 ist zu diesem Zeitpunkt bereits wieder geringfügig unter das maximale Höhenniveau N₊ abgesenkt worden, um den Austausch der Behältnisse 11, 12 in der Behandlungseinrichtung möglichst schnell abwickeln zu können. Da das erste Behältnis 11 in diesem Bereich weiterhin der Behandlungsvorrichtung angenähert wird, überschneiden sich hier Annäherungsabschnitt A_{A} und Übernahme-Übergabe-Abschnitt A_{Ü}.

Während des Durchlaufs des Übernahme-Übergabe-Abschnitts A_{Ü} wird die Übernameeinrichtung 14 zusammen mit dem zweiten Behältnis 12 vom mittleren Höhenniveau N₀ auf das minimalen Höhenniveau N₋ abgesenkt. Dadurch wird in der Behandlungseinrichtung Platz zur Aufnahme des ersten Behältnisses 11 geschaffen. Zum Einbringen des ersten Behältnisses 11 in die Behandlungseinrichtung wird dieses zusammen mit den Übergabeeinrichtung 13 auf das mittlere Niveau N₀ abgesenkt, auf welchem sich auch eine (nicht gezeigte) Behältnisaufnahme der Behandlungseinrichtung befindet. Nach der Übergabe des ersten Behältnisses an die Behandlungseinrichtung ist die Übergabeeinrichtung 13 unbesetzt, es befindet sich also kein Behältnis in der Halteeinrichtung der Übergabeeinrichtung 13. Da das zweite Behältnis 12 in einem Abschnitt dieses Bereichs bereits von der Behandlungsvorrichtung entfernt wird, überschneiden sich hier Annäherungsabschnitt A_{A} und Übernahme-Übergabe-Abschnitt A_{Ü} mit dem Entfernungsabschnitt A_{E}.

Beim Eintritt des Paars aus Übergabeeinrichtung 13 und Übernameeinrichtung 14 in den Entfernungsabschnitt A_{E} halten somit beide jeweils ein Behältnis 11, 12. Erst nach Verlassen des Übernahme-Übergabe-Abschnitts A_{Ü} ist das Haltelement der Übergabeeinrichtung 13 wieder frei und Übergabeeinrichtung 13 somit zur Aufnahme eines anderen ersten Behältnisses bereit. Die Übergabeeinrichtung 13 befindet sich zu diesem Zeitpunkt auf dem mittleren Höhenniveau N₀.Die Halteeinrichtung der Übernameeinrichtung 14, bleibt während des Durchlaufs des Entfernungsabschnitts A_{E} stets mit dem aus der Behandlungseinrichtung entnommenen zweiten Behältnis 12 besetzt.

Während des Durchlaufs des Entfernungsabschnitts A_{E} werden sowohl Übergabeeinrichtung 13 - und damit auch das erste Behältnis 11 - als auch Übernameeinrichtung 14 - und damit auch das zweite Behältnis 12 - angehoben, so dass sie sich die Übergabeeinrichtung 13 zumindest zeitweise oberhalb des mittleren Höhenniveaus N₀ befindet, welches zumindest zeitweise von der Übernameeinrichtung 14 besetzt ist. Am Ende des Entfernungsabschnitts A_{E} befindet sich die Übernameeinrichtung 14 auf dem mittleren Höhenniveau N₀, und kann das behandelte zweite Behältnis an eine nicht dargestellte weitere Transportvorrichtung übergeben.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Transportvorrichtung
- 2: Träger
- 4: Behandlungseinrichtung
- 5: Heizvorrichtung
- 6: weitere Transportvorrichtung
- 7: weitere Transportvorrichtung
- 8: Halteelement
- 9: Verbindungselement
- 10: Anlage
- 11: erste Behältnisse
- 12: zweite Behältnisse
- 13: Übergabeeinrichtung
- 14: Übernameeinrichtung
- 15: Behandlungseinrichtung
- 16: Bodenteil
- 17: erste Blasformhälfte
- 18: zweite Blasformhälfte
- 19: Führung, Schiene
- 20: Behältnisaufnahme
- 200: Anlage
- 201: Transportvorrichtung
- 202: Einlaufstern
- 203: Auslaufstern
- 204: Blasrad
- 205: Heizvorrichtung
- 206, 207: weitere Transportvorrichtung
- N₊: maximales Höhenniveau
- N₀: mittleres Höhenniveau
- N₋: minimales Höhenniveau
- A_{A}: Annäherungsabschnitt
- A_{Ü}: Übernahme-Übergabe-Abschnitt
- A_{E}: Entfernungsabschnitt
- T: Transportpfad
- R1: Rotationsrichtung der Behandlungseinrichtung
- R2: Rotationsrichtung der Transportvorrichtung
- U: Kreisumfang
- K10: Kreisbogen
- K14: Kreisbogen
- S10: Behandlungssektor
- S11: Sektor
- S12: Übergabesektor
- S13: Übernahmesektor
- S14: Sektor

## Patentansprüche

1. Transportvorrichtung für Behältnisse (11, 12), welche eine Übergabeeinrichtung (13) zur Übergabe eines Behältnisses (11) an eine bewegliche Behandlungseinrichtung (4), welche mindestens eine bezüglich der Behandlungseinrichtung (4) ortsfeste Behältnisaufnahme (20) aufweist, und eine Übernahmeeinrichtung (14) zur Übernahme eines Behältnisses (12) von der beweglichen Behandlungseinrichtung (4) aufweist, wobei die Übergabeeinrichtung (13) und die Übernahmeeinrichtung (14) auf einem gemeinsamen beweglichen Träger (2) angeordnet sind, wobei die Übergabeeinrichtung (13) und die Übernahmeeinrichtung (14) abschnittsweise entlang eines Transportpfades der Behältnisse beweglich sind, wobei die Übergabeeinrichtung (13) und die Übernahmeeinrichtung (14) zur Übergabe oder Übernahme eines Behältnisses (11, 12) zumindest abschnittsweise mit einer Bewegung der Behältnisaufnahme (20) synchronisierbar sind
**dadurch gekennzeichnet, dass**
mindestens die Übergabeeinrichtung und/oder die Übernahmeeinrichtung entlang einer Richtung bewegbar ist, die eine zur Bewegungsrichtung des beweglichen Trägers senkrecht verlaufende Richtungskomponente aufweist.

2. Transportvorrichtung nach Anspruch 1,
**dadurch gekennzeichnet, dass**
die Übergabeeinrichtung und die Übernahmeeinrichtung auf einem gemeinsamen Transportpfad gegenüber dem beweglichen Träger relativbeweglich sind.

3. Transportvorrichtung nach Anspruch 1 oder 2,
**dadurch gekennzeichnet, dass**
die Behandlungseinrichtung und/oder der bewegliche Träger auf einer Kreisbahn bewegbar sind und in einem Sektor, in dem die Übergabeeinrichtung und die Übernahmeeinrichtung unabhängig voneinander mit einer Bewegung der Behältnisaufnahme synchronisiert sind, ein Behältnis von der Übernahmeeinrichtung aus der Behältnisaufnahme entnehmbar ist und ein anderes Behältnis von der Übergabeeinrichtung in die Behältnisaufnahme derselben Behandlungseinrichtung einsetzbar ist.

4. Transportvorrichtung nach einem der vorangegangenen Ansprüche,
**dadurch gekennzeichnet, dass**
die Behandlungseinrichtung eine Blasstation ist.

5. Transportvorrichtung nach einem der vorangegangenen Ansprüche,
**dadurch gekennzeichnet, dass**
die Behältnisaufnahme zumindest entlang der axialen Richtung eines aufgenommenen Behältnisses gegenüber der Behandlungsvorrichtung ortsfest ist.

6. Transportvorrichtung nach einem der vorangegangenen Ansprüche,
**dadurch gekennzeichnet, dass**
mindestens die Übergabeeinrichtung und/oder die Übernahmeeinrichtung senkrecht zu einer Bewegungsrichtung des beweglichen Trägers relativ zu diesem bewegbar ist.

7. Verfahren zur Übergabe und zur Übernahme von Behältnissen durch eine Transportvorrichtung für Behältnisse, welche eine Übergabeeinrichtung und eine Übernahmeeinrichtung aufweist die auf einem gemeinsamen beweglichen Träger angeordnet sind, gegenüber welchem sie relativbeweglich sind, wobei die Übernahmeeinrichtung ein erstes Behältnis von einer bezüglich einer zugeordneten Behandlungseinrichtung ortsfesten Behältnisaufnahme übernimmt, die an einer beweglichen Behandlungseinrichtung angeordnet ist, und die Übergabeeinrichtung ein zweites Behältnis an eine Behältnisaufnahme derselben Behandlungseinrichtung übergibt, **gekennzeichnet durch** die Schritte:
a) Synchronisation der Bewegung der Behandlungseinrichtung und der Übernahmeeinrichtung,
b) Übernahme eines ersten Behältnisses von der Behältnisaufnahme der Behandlungseinrichtung durch die Übernahmeeinrichtung,
c) Synchronisation der Bewegung der Übergabeeinrichtung und der Behandlungseinrichtung,
d) Übergabe eines zweiten Behältnisses von der Übergabeeinrichtung an eine Behältnisaufnahme der in Schritt b) freigewordenen Behandlungseinrichtung,
wobei mindestens die Übergabeeinrichtung und/oder die Übernahmeeinrichtung entlang einer Richtung bewegt wird, die eine zur Bewegungsrichtung des beweglichen Trägers senkrecht verlaufende Richtungskomponente aufweist.

8. Verfahren nach Anspruch 7,
**dadurch gekennzeichnet, dass**
mindestens die Übergabeeinrichtung und/oder die Übernahmeeinrichtung senkrecht zu einer Bewegungsrichtung des beweglichen Trägers relativ zu diesem bewegt wird.

9. Verfahren nach einem der Ansprüche 7 - 8,
**dadurch gekennzeichnet, dass**
die Übergabeeinrichtung und die Übernahmeeinrichtung auf dem beweglichen Träger zumindest abschnittsweise auf einer Kreisbahn geführt werden.

10. Verfahren nach einem der Ansprüche 7 - 9,
**dadurch gekennzeichnet, dass**
das erste und das zweite Behältnis entlang eines Transportpfades geführt werden, dessen senkrechte Projektion mindestens einen Kreuzungspunkt aufweist.

## Claims

1. Transport apparatus for containers (11, 12), which has a transfer device (13) for transferring a container (11) to a movable treatment device (4), which has at least one container holder (20) which is stationary with respect to the treatment device (4), and a takeover device (14) for taking over a container (12) from the movable treatment device (4), wherein the transfer device (13) and the takeover device (14) are arranged on a common movable carrier (2), wherein the transfer device (13) and the takeover device (14) are movable in sections along a transport path of the containers, wherein the transfer device (13) and the takeover device (14) for transferring or taking over a container (11, 12) can be synchronized at least in sections with a movement of the container holder (20),
**characterized in that**
at least the transfer device and/or the takeover device can be moved along a direction which has a directional component running perpendicular to the direction of movement of the movable carrier.

2. Transport apparatus according to claim 1,
**characterized in that**
the transfer device and the takeover device can move relative to the movable carrier on a common transport path.

3. Transport apparatus according to claim 1 or 2,
**characterized in that**
the treatment device and/or the movable carrier can be moved on a circular path and, in a sector in which the transfer device and the takeover device are synchronized independently of one another with a movement of the container holder, a container can be removed from the container holder by the takeover device and another container can be inserted into the container holder of the same treatment device by the transfer device.

4. Transport apparatus according to any of the preceding claims,
**characterized in that**
the treatment device is a blowing station.

5. Transport apparatus according to any of the preceding claims,
**characterized in that**
the container holder is stationary relative to the treatment device at least along the axial direction of a received container.

6. Transportation apparatus according to any one of the preceding claims,
**characterized in that**
at least the transfer device and/or the takeover device can be moved perpendicular to a direction of movement of the movable carrier relative to the latter.

7. Method for transferring and for taking over containers by a transport device for containers, which has a transfer device and a takeover device which are arranged on a common movable carrier with respect to which they are relatively movable, wherein the takeover device takes over a first container from a container holder which is stationary with respect to an associated treatment device and which is arranged on a movable treatment device, and the transfer device transfers a second container to a container holder of the same treatment device, **characterized by** the steps:
a) Synchronization of the movement of the treatment device and the takeover device,
b) Takeover of a first container from the container holder of the treatment device by the takeover device,
c) Synchronization of the movement of the transfer device and the treatment device,
d) Transfer of a second container from the transfer device to a container holder of the treatment device released in step b),
wherein at least the transfer device and/or the takeover device is moved along a direction which has a directional component running perpendicular to the direction of movement of the movable carrier.

8. Method according to claim 7,
**characterized in that**
at least the transfer device and/or the takeover device is moved perpendicular to a direction of movement of the movable carrier relative to the latter.

9. Method according to any one of claims 7-8,
**characterized in that**
the transfer device and the takeover device are guided on the movable carrier on a circular path, at least in sections.

10. Method according to any one of claims 7-9,
**characterized in that**
the first and second containers are guided along a transport path whose vertical projection has at least one crossing point.

## Revendications

1. Dispositif de transport pour des récipients (11, 12), lequel présente un système de transfert (13) destiné à transférer un récipient (11) à un système de traitement mobile (4), lequel présente au moins un logement de récipient (20) stationnaire par rapport au système de traitement (4), et un système de réception (14) destiné à réceptionner un récipient (12) provenant du système de traitement mobile (4), dans lequel le système de transfert (13) et le système de réception (14) sont disposés sur un support mobile (2) commun, dans lequel le système de transfert (13) et le système de réception (14) sont mobiles par endroits le long d'un trajet de transport des récipients, dans lequel le système de transfert (13) et le système de réception (14) peuvent être synchronisés au moins par endroits avec un déplacement du logement de récipient (20) pour le transfert ou la réception d'un récipient (11, 12),
**caractérisé en ce que**
au moins le système de transfert et/ou le système de réception peuvent être déplacés le long d'une direction, qui présente une composante directionnelle s'étendant de manière perpendiculaire par rapport à la direction de déplacement du support mobile.

2. Dispositif de transport selon la revendication 1,
**caractérisé en ce que**
le système de transfert et le système de réception sont relativement mobiles par rapport au support mobile sur un trajet de transport commun.

3. Dispositif de transport selon la revendication 1 ou 2,
**caractérisé en ce que**
le système de traitement et/ou le support mobile peuvent être déplacés sur une trajectoire circulaire et un récipient peut être retiré par le système de réception hors du logement de récipient dans un secteur, dans lequel le système de transfert et le système de réception sont synchronisés indépendamment l'un de l'autre avec un déplacement du logement de récipient et un autre récipient peut être inséré dans le logement de récipient du même système de traitement par le système de transfert.

4. Dispositif de transport selon l'une quelconque des revendications précédentes,
**caractérisé en ce que**
le système de traitement est une station de soufflage.

5. Dispositif de transport selon l'une quelconque des revendications précédentes,
**caractérisé en ce que**
le logement de récipient est stationnaire par rapport au dispositif de traitement au moins le long de la direction axiale d'un récipient logé.

6. Dispositif de transport selon l'une quelconque des revendications précédentes,
**caractérisé en ce que**
au moins le système de transfert et/ou le système de réception peuvent être déplacés de manière perpendiculaire par rapport à une direction de déplacement du support mobile par rapport à celui-ci.

7. Procédé de transfert et de réception de récipients par un dispositif de transport pour des récipients, lequel présente un système de transfert et un système de réception, qui sont disposés sur un support mobile commun, par rapport auquel ils sont relativement mobiles, dans lequel le système de réception réceptionne un premier récipient provenant d'un logement de récipient stationnaire par rapport à un système de traitement associé, qui est disposé sur un système de traitement mobile, et le système de transfert transfère un deuxième récipient à un logement de récipient du même système de traitement, **caractérisé par** les étapes :
a) de synchronisation du déplacement du système de traitement et du système de réception,
b) de réception d'un premier récipient provenant du logement de récipient du système de traitement par le système de réception,
c) de synchronisation du déplacement du système de transfert et du système de traitement,
d) de transfert d'un deuxième récipient depuis le système de transfert à un logement de récipient du système de traitement libéré dans l'étape b),
dans lequel au moins le système de transfert et/ou le système de réception sont déplacés le long d'une direction, qui présente une composante directionnelle s'étendant de manière perpendiculaire par rapport à la direction de déplacement du support mobile.

8. Procédé selon la revendication 7,
**caractérisé en ce que**
au moins le système de transfert et/ou le système de réception sont déplacés de manière perpendiculaire par rapport à une direction de déplacement du support mobile par rapport à celui-ci.

9. Procédé selon l'une quelconque des revendications 7 - 8,
**caractérisé en ce que**
le système de transfert et le système de réception sont guidés au moins par endroits sur une trajectoire circulaire sur le support mobile.

10. Procédé selon l'une quelconque des revendications 7 - 9,
**caractérisé en ce que**
le premier et le deuxième récipient sont guidés le long d'un trajet de transport, dont la projection perpendiculaire présente au moins un point d'intersection.
